# EUROPÄISCHE PATENTANMELDUNG

(11) **EP 4 198 921 A1**
(43) Veröffentlichungstag der Anmeldung: **21.06.2023**
(21) Anmeldenummer: 21215399.3
(22) Anmeldetag: 17.12.2021
(51) Int. Cl.: G06V 20/58, G06V 10/25

(54) **OBJEKTERKENNUNG IN EINER SIMULIERTEN UMGEBUNG**

(71) Anmelder: dSPACE GmbH, 33102 Paderborn (DE)
(72) Erfinder: Gimpel, Burkhardt, 33102 Paderborn (DE); Zubert, Thomas, 33102 Paderborn (DE)

(57) **Zusammenfassung**

Die vorliegende Erfindung betritt ein Computer-implementiertes Verfahren sowie ein Simulationssystem 50 zum Erkennen von Objekten 31, 32, 33, 110, 201, die von einem Sensor 11 erfasst werden, wobei sich die Objekte 31, 32, 33, 110, 201 und der Sensor 11 in einer simulierten Umgebung 100, 200 relativ zueinander bewegen. Das Verfahren umfasst den Schritt S100 des Identifizierens von Objekten 110, 201, die innerhalb eines Vorauswahlbereichs 30, 230, 231 in der simulierten Umgebung 100, 200 liegen, wobei der Vorauswahlbereich 30, 230, 231 einen Erfassungsbereich 20 des Sensors 11 umfasst, sowie den Schritt S200 des Bestimmens, ob ein Objekt 31, 32, 33, 110, 201 in dem Vorauswahlbereich 30, 230, 231 von dem Sensorerfassungsbereich 20 erfasst wird. Erfindungsgemäß werden im Schritt S100 Objekte 31, 32, 33, 110, 201 identifiziert, die zu einem aktuellen Zeitpunkt in dem Vorauswahlbereich 30, 230, 231 liegen, indem Listen 210, 220 mit sortierten Koordinaten entlang von Dimensionen der simulierten Umgebung 100, 200 geführt werden, welche solche Objekte 31, 32, 33, 110, 201 identifizieren, die zu einem früheren Zeitpunkt gemäß Schritt S110 in dem Vorauswahlbereich 30, 230, 231 lagen. Die Koordinatenlisten 210, 220 werden in Schritt S120 aktualisiert, indem im Schritt S124 Objektidentifizierungen hinzugefügt oder entfernt werden. Die Erfindung betrifft ferner ein entsprechendes Sensorsystem 50 sowie ein entsprechendes Computerprogrammprodukt 60.

## Beschreibung

Die vorliegende Erfindung betrifft ein computerimplementiertes Verfahren zum Erkennen von Objekten, die von einem Sensor erfasst werden, wobei sich die Objekte und der Sensor in einer simulierten Umgebung relativ zueinander bewegen können. Die Erfindung betrifft ferner ein Simulationssystem sowie ein Computerprogrammprodukt, die jeweils das erfindungsgemäße Verfahren realisieren.

Aus der Fahrzeugtechnik ist heutzutage der Einsatz von Fahrerassistenzsystemen nicht mehr wegzudenken, die die Umgebung des betreffenden Fahrzeugs sowie die dynamische Verkehrssituation mit den weiteren Verkehrsteilnehmern überwachen. Derartige Assistenzsysteme sind bis hin zum autonomen Fahren, also dem sicheren, algorithmengesteuerten Manövrieren eines Fahrzeugs im öffentlichen Verkehr, ohne leistungsfähige Sensortechnik nicht realisierbar. Es versteht sich von selbst, dass sowohl die Sensordatenerfassung als auch die nachgeschaltete Sensordatenverarbeitung, also die Auswertung der erfassten Sensordaten und die Umsetzung in eine situationsangepasste Reaktion des Fahrzeugs im fließenden Verkehr, geeignet ausgelegt sein müssen, damit das Fahrzeug in Echtzeit auf eine dynamische Verkehrssituation regieren kann.

Der Prozess der Entwicklung und Optimierung sowie des Testens solcher Sensoren sowie vor allem der Sensordatenverarbeitung und Fahrzeugsteuerung findet zu einem großen Teil im Rahmen von rechnergestützten Simulationen statt. So werden etwa mittels Computermodellen Fahrzeuge, Verkehrsteilnehmer, Verkehrsobjekte und auch Fahrzeugsensoren simuliert, um Fahrerassistenzsysteme in virtuellen Umgebungen zu entwickeln und abzusichern. Die Anmelderin vermarktet entsprechende Modelle beispielsweise als "Automotive Simulation Models" (ASM). Ein solches ASM simuliert beispielsweise das Straßennetz, das zu testende Fahrzeug, die sich relativ zum Fahrzeug und zueinander bewegenden Verkehrsteilnehmer sowie die Umgebung und ermöglicht so die Entwicklung und das Testen von Fahrerassistenzsystemen in virtuellen Verkehrsumgebungen. Innerhalb der simulierten Umgebung ist das (simulierte) Test- bzw.

Referenzfahrzeug - häufig als Ego-Fahrzeug bezeichnet - mit mehreren (simulierten) Sensoren zur Objekterkennung - auch als ASM-Sensoren bezeichnet - ausgestattet, während die Sensordatenverarbeitung bzw. Fahrzeugsteuerung als Echtzeitapplikation auf die simulierte Verkehrssituation reagiert.

Eine der vielen Herausforderungen in diesem Zusammenhang ist die erforderliche deutliche Leistungsverbesserung von ASM-Sensoren sowie der Sensordatenverarbeitung bzw. Fahrzeugsteuerung im Rahmen von Echtzeitapplikationen bei Verkehrsszenarien mit sehr vielen statischen und/oder dynamischen Objekten.

Bei der Simulation von ASM-Sensoren wird geprüft, welche Objekte aus der Menge aller Objekte Ow einer simulierten Welt W im Sensorerfassungsbereich ("sensor scope") liegen und welche Eigenschaften diese Objekte haben. Hierbei ist es für die Echtzeitfähigkeit essenziell, die beschränkt zur Verfügung stehenden Rechenkapazitäten nicht mit überflüssigen Berechnungen zu verbrauchen, zum Beispiel mit solchen, die Objekte weit entfernt vom Referenzfahrzeug bzw. weit außerhalb des Sensorerfassungsbereichs betreffen.

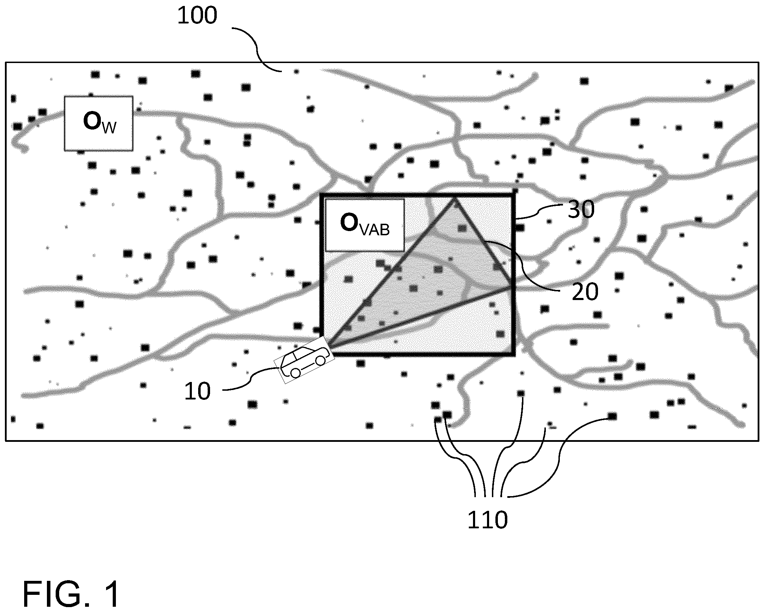

Deshalb werden im Rahmen einer sogenannten "Broad Phase" zunächst die Objekte aus O_{W} identifiziert, die potenziell im Sensorerfassungsbereich liegen können, und erst in der anschließenden "Narrow Phase" wird für jedes einzelne dieser Objekte konkret geprüft, ob es tatsächlich im Sensorerfassungsbereich liegt. In der "Broad Phase" wird also um den Sensorerfassungsbereich ein Vorauswahlbereich (VAB) mit einfacher Geometrie gelegt und es wird diejenige Teilmenge O_{VAB} in der Menge Owaller Objekte bestimmt, die innerhalb des Vorauswahlbereichs liegt. Die Teilmenge O_{VAB} wird dann in der "Narrow Phase" detailliert weiterverarbeitet. Fig. 1. zeigt eine simulierte Welt 100 mit den die Objektmenge Ow bildenden Objekten 101, dem Referenz- bzw. Ego-Fahrzeug 10, dem kegelförmigen Sensorerfassungsbereich 20 sowie dem Vorauswahlbereich 30 mit den darin liegenden Teilmenge O_{VAB}. Ohne die "Broad Phase" sind Sensorsimulationen in der Regel nicht echtzeitfähig durchführbar.

Gemäß bekannten Verfahren werden Objekte als im Vorauswahlbereich liegend identifiziert, indem alle oder zumindest nahezu alle Objekte O_{W} der simulierten Welt dahingehend geprüft werden, ob sie innerhalb des Vorauswahlbereichs und damit in O_{VAB} liegen. Da der Rechenaufwand proportional mit der Anzahl der Objekte Owzunimmt, sind solche Lösungen ab einer bestimmten Größe der simulierten Welt nicht mehr echtzeitfähig, da zu viel Rechenkapazität auf die "Broad Phase" entfällt. Diese Nachteile entstehen bereits bei Verkehrssituationen mit vielen statischen (sich nicht bewegenden) Objekten, wie etwa großen Straßennetzwerke mit parkenden Fahrzeugen, Verkehrsschildern, Straßenbegrenzungen, angrenzenden Bauten etc., ohne dass die Objekte sich relativ zueinander bewegen müssen.

Nur geringe Abhilfe schafft vor diesem Hintergrund das Abschalten nicht benötigter Sensorfeatures im ASM-Sensormodell, etwa im Wege der Auflösungsreduktion oder dem Verzicht auf die Erhebung nicht benötigter Daten oder die Berechnung nicht benötigter Objekteigenschaften. Ein weiterer bekannter Ansatz partitioniert die simulierte Welt in Kacheln geeigneter Größe und ordnet ihnen die entsprechenden Anteile der Objektmenge Owzu, wobei nur Objekte aus solchen Kacheln auf Zugehörigkeit zu O_{VAB} geprüft werden, die den Auswahlbereich zumindest teilweise überlappen. Auch dieser Ansatz kann jedoch die Echtzeitfähigkeit in simulierten Welten mit vielen statischen oder gar dynamischen Objekten nicht zuverlässig sicherstellen, denn bei komplexen und dichten Verkehrssituationen können die einzelnen Kacheln zu viele Objekte enthalten.

Insofern ist es die Aufgabe der vorliegenden Erfindung, eine Lösung der vorgenannten Probleme vorzuschlagen.

Die vorliegende Erfindung löst diese Aufgabe durch die anliegenden unabhängigen Ansprüche. Bevorzugte Ausführungsformen der Erfindung sind in den davon abhängigen Ansprüchen angegeben.

Gemäß einem ersten Aspekt der Erfindung wird ein Computer-implementiertes Verfahren zum Erkennen von Objekten vorgeschlagen, welche von einem Sensor erfasst werden. Die Objekte und der Sensor befinden sich in einer simulierten Umgebung bzw. simulierten Welt und bewegen sich aufgrund der Eigenbewegung eines Referenzfahrzeugs zwischen einem früheren und einem aktuellen Zeitpunkt relativ zu diesem und/oder relativ zueinander. Der Sensor ist hierbei innerhalb der simulierten Umgebung vorzugsweise mit dem Referenzfahrzeug assoziiert oder verbunden, aus dessen Sicht und zu dessen Steuerung die simulierte Objekterkennung durchgeführt wird.

Das Verfahren umfasst zwei grundlegende Schritte, nämlich einerseits das
(a) Identifizieren von Objekten, die innerhalb eines Vorauswahlbereichs in der simulierten Umgebung liegen, wobei der Vorauswahlbereich einen Erfassungsbereich des Sensors umfasst, und andererseits das
(b) Bestimmen, ob ein Objekt, das in dem Vorauswahlbereich liegt, auch von dem Sensorerfassungsbereich erfasst wird.

Erfindungsgemäß werden im Schritt (a) Objekte, die zum aktuellen Zeitpunkt (d.h. Simulationsschritt) im Vorauswahlbereich liegen, anhand einer Aktualisierung von Listen mit sortierten Koordinaten identifiziert, die solche Objekte identifizieren, die zum früheren Zeitpunkt in dem Vorauswahlbereich lagen.

Dabei wird für eine zweckmäßige Anzahl an ausgewählten Dimensionen der simulierten Umgebung je eine separate sortierte Koordinatenliste geführt, wobei vorzugsweise für jede Dimension der simulierten Umgebung je eine separate sortierte Koordinatenliste geführt wird. So kann es in einer dreidimensionalen Umgebung ausreichend sein, sortierte Koordinatenlisten für zwei Dimensionen zu führen, etwa für die die Ebene aufspannenden x- und y-Dimensionen. Genauso gut kann es erforderlich sein, für alle drei Dimensionen x, y und z sortierte Koordinatenlisten zu führen.

Die einzelnen Koordinatenlisten umfassen dabei lediglich die jeweiligen Koordinaten der Objekte entlang der betreffenden Dimension. In einem zweidimensionalen Szenario mit x/y-Koordinaten werden die x-Koordinaten der betreffenden Objekte, bzw. deren entsprechende x-Komponenten, der Größe nach auf- oder absteigend sortiert in der x-Koordinatenlisten abgelegt und die y-Koordinaten der Objekte, bzw. deren entsprechende y-Komponenten, werden der Größe nach auf- oder absteigend sortiert in der y-Koordinatenlisten abgelegt.

Die Objekte, die zu einem bestimmten (früheren oder aktuellen) Zeitpunkt im Vorauswahlbereich lagen oder liegen, werden hierbei entweder dadurch identifiziert, dass diese Objekte in einer spezifischen Liste oder Datenstruktur verzeichnet sind, oder durch entsprechende Kennzeichnungen in den Koordinatenlisten und/oder durch die Sortierung der Koordinaten, etwa dadurch, dass die Koordinaten von Objekten im Vorauswahlbereich zwischen zwei ausgezeichneten Koordinaten liegen, die die Grenzen des Vorauswahlbereichs repräsentieren.

Im Schritt (b) werden dann diejenigen identifizierten Objekte im Vorauswahlbereich bestimmt, die tatsächlich im Sensorerfassungsbereich liegen, die das Referenzfahrzeug also vermittels seines Sensors "wahrnimmt". Dazu können aus dem Stand der Technik bekannte algorithmische Verfahren zur Erkennung einer Kollision zweier virtueller Objekte Anwendung finden.

Unabhängig davon, wie genau die Objektidentifizierungen realisiert werden, werden die Koordinatenlisten erfindungsgemäß zum aktuellen Zeitpunkt dadurch aktualisiert, dass
(a1) Objektidentifizierungen von Objekten hinzugefügt werden, welche zum aktuellen Zeitpunkt in einem erscheinenden Abschnitt des Vorauswahlbereichs liegen, der zum früheren Zeitpunkt noch nicht von dem Vorauswahlbereich erfasst wurde und /oder
(a2) Objektidentifizierungen von Objekten entfernt werden, welche zum früheren Zeitpunkt in einem verschwindenden Abschnitt des Vorauswahlbereichs lagen, der zum aktuellen Zeitpunkt nicht mehr von dem Vorauswahlbereich erfasst wird.

In dem Maße, wie sich der Vorauswahlbereich beim Übergang vom früheren zum aktuellen Zeitpunkt verändert, etwa weil sich das Referenzfahrzeug mit dem Sensor durch die simulierte Umgebung bewegt und/oder weil sich die Objekte relativ zueinander bewegen, erscheinen neue Objekte im Vorauswahlbereich und/oder andere verlassen ihn. Da sich nur bezüglich dieser Objekte die Menge O_{VAB} der Objekte im Vorauswahlbereich ändert - alle anderen Objekte verbleiben nämlich im Vorauswahlbereich, ohne dass dies zu prüfen ist - werden erfindungsgemäß nur der erscheinende und der verschwindende Abschnitt des Vorauswahlbereichs geprüft. Der erscheinende Abschnitt ist definiert als derjenige Abschnitt des Vorauswahlbereichs zum aktuellen Zeitpunkt, der noch nicht Teil des Vorauswahlbereichs zum früheren Zeitpunkt war. Der verschwindende Abschnitt ist definiert als derjenige Abschnitt des Vorauswahlbereichs zum früheren Zeitpunkt, der nicht mehr Teil des Vorauswahlbereichs zum aktuellen Zeitpunkt ist.

Die Erfindung nutzt die geringen Änderungen im Vorauswahlbereich beim Übergang zwischen zwei Zeitpunkten aus, indem vermittels des erscheinenden und verschwindenden Abschnitts nur diejenigen Objekte betrachtet werden, die potenziell für eine Änderung der Menge O_{VAB} der Objekte im Vorauswahlbereich sorgen können.

Auf diese Weise wird die zur Berechnung der Menge O_{VAB} der Objekte im Vorauswahlbereich benötige Rechenkapazität signifikant reduziert, so dass bei Sensorsimulationen mit zahlreichen Objekten die Nachteile bekannter "Broad Phase" Ansätze überwunden und die Echtzeitfähigkeit auch bei simulierten Umgebungen mit besonders vielen Objekten und/oder bei sich relativ zueinander bewegenden Objekten zuverlässig erreicht wird.

Die Erfindung bietet insofern eine deutliche Leistungsverbesserung beim Betrieb von ASM-Sensoren sowie vor allem bei der nachgeordneten Sensordatenverarbeitung bzw. resultierenden Fahrzeugsteuerung, so dass Echtzeitapplikationen in Verkehrsszenarien mit sehr vielen statischen und/oder dynamischen Objekten erfasst und bewertet werden können und adäquat darauf reagiert werden kann. Die Erfindung eignet sich für den Einsatz als Echtzeitapplikation in realen Fahrzeugen, die mit realen Verkehrsszenarien konfrontiert sind. Zudem lässt sich die Erfindung leicht in Form einer Software implementieren und warten.

Gemäß einer bevorzugten Ausführungsform der Erfindung umfassen die Koordinatenlisten für jede einzelne Dimension der simulierten Umgebung zu einem bestimmten Zeitpunkt jeweils repräsentative Koordinaten der erfassten Objekte sowie maximale und minimale Koordinaten des Vorauswahlbereichs entlang der betreffenden Dimension. Repräsentative Koordinaten der Objekte sind solche Koordinaten, die das betreffende Objekt in der simulierten Umgebung mit hinreichender Präzision repräsentieren bzw. lokalisieren, zum Beispiel die Koordinate des Schwerpunkts des in der simulierten Umgebung flächig erfassen Objekts, der geometrische Mittelwert von zumindest zwei Eckpunkten dieser flächigen Repräsentation oder repräsentative Koordinaten aufgrund andere geeigneter geometrischer Konzepte.

Der Vorauswahlbereich wird in den Koordinatenlisten wiederum durch dessen maximale und minimale Koordinaten betreffend die jeweilige Dimension definiert. Hat zum Beispiel ein zweidimensionaler Vorauswahlbereich die Eckpunkte (3, 4), (8, 4), (3, 9) und (8, 9), so wird dieser in der x-Koordinatenliste mit der minimalen Koordinate x=3 und der maximalen Koordinate x=8 angegeben, und in der y-Koordinatenliste mit der minimalen Koordinate y=4 und der maximalen Koordinate y=9. Ein Objekt a mit der repräsentativen Koordinate (5, 6) liegt dann bezüglich sowohl der x-Koordinate (3 ≤ *y* ≤ 8) als auch der y-Koordinate (4 ≤ *y* ≤ 9) im Vorauswahlbereich, während ein Objekt b mit der Koordinate (9, 7) lediglich bezüglich der y-Koordinate im Vorauswahlbereich liegt, nicht aber bezüglich der x-Koordinate. Während das Objekt a insofern als im zweidimensionalen Vorauswahlbereich liegend identifiziert wird, liegt das Objekt b nicht im zweidimensionalen Vorauswahlbereich und wird auch nicht als solches identifiziert.

In den einzelnen sortierten Koordinatenlisten werden diejenigen Koordinaten gekennzeichnet, die betreffend die jeweilige Dimension zwischen den minimalen und maximalen Koordinaten des Vorauswahlbereichs entlang dieser Dimension liegen. Diese Kennzeichnung kann etwa darin bestehen, dass die Koordinatenlisten sortiert sind und allein schon deshalb ohne Weiteres ersichtlich ist, welche repräsentativen Objektkoordinaten im Vorauswahlbereich betreffend die jeweilige Dimension liegen. Beispielsweise würden im oben genannten Beispiel die sortierten x- und y-Koordinatenlisten vereinfacht wie folgt aussehen:
*x*: (3, 5, 8, 9);
*y*: (4, 5, 7, 9),
wobei die unterstrichenen Koordinaten die maximalen und minimalen Koordinaten des Vorauswahlbereichs sind und in der x-Koordinatenliste die Koordinate x=5 und in der y-Koordinatenliste die Koordinaten y=5 und y=7 in der oben erläuterten Weise gekennzeichnet sind.

Zusätzlich können die repräsentativen Koordinaten in den jeweiligen Koordinaten auch durch separate Flags, Bits oder dergleichen gekennzeichnet werden, etwa mit "1" für innerhalb des Vorauswahlbereichs betreffend die jeweilige Dimension liegende Koordinaten und "0" für betreffend diese Dimension außerhalb des Vorauswahlbereichs liegende Koordinaten. Nur Objekte, von denen zumindest eine repräsentative Koordinate in der beschriebenen Weise gekennzeichnet ist, befinden sich innerhalb des mehrdimensionalen Vorauswahlbereichs und werden entsprechend identifiziert. Alle anderen Objekte liegen insofern nicht innerhalb des mehrdimensionalen Vorauswahlbereichs, da sie bezüglich mindestens einer Dimension davon abweichen, bezüglich dieser Dimension also nicht gekennzeichnet sind.

Gemäß einer weiteren bevorzugten Ausführungsform der Erfindung werden als repräsentative Koordinaten der Objekte die minimalen und maximalen Koordinaten der Objekte betreffend die jeweiligen Dimensionen verwendet und jeweils individuell gekennzeichnet. Ein Objekt mit den Eckpunkten (37, 41), (85, 41), (37, 77) und (85, 77) in einer Umgebung mit einem zweidimensionaler Vorauswahlbereich mit den Eckpunkten (20, 30), (60, 30), (20, 90) und (60, 90) hat also folgende vereinfachte Koordinatenlisten zur Folge:
*x*: (20, 37, 60, 85);
y: (30, 41, 77, 90).

Während das Objekt bezüglich der y-Koordinate vollständig innerhalb des Vorauswahlbereichs liegt, liegt es bezüglich der x-Koordinate lediglich teilweise innerhalb des Vorauswahlbereichs.

Um sicherzustellen, dass Objekte eindeutige Eckpunkte wie zuvor beschrieben ausweisen, ist es besonders vorteilhaft, wenn die Objekte durch Hüllquader (Bounding Boxes) von Grafikobjekten ausgebildet sind.

In diesem Zusammenhang ist es eine bevorzugte Ausführungsform der Erfindung, dass solche Objekte als zu dem bestimmten Zeitpunkt innerhalb des Vorauswahlbereichs liegend identifiziert werden, von denen wenigstens eine repräsentative Koordinate entlang aller Dimensionen zwischen den maximalen und minimalen Koordinaten des Vorauswahlbereichs liegt und deshalb in den Koordinatenlisten entsprechend gekennzeichnet ist. Sofern als repräsentative Koordinaten die maximalen und minimalen Koordinaten der Objekte verwendet werden, wird ein Objekt also bereits dann als innerhalb des Vorauswahlbereichs liegend identifiziert, wenn zumindest ein mehrdimensionaler Eckpunkt des Objekts innerhalb des mehrdimensionalen Vorauswahlbereich liegt.

Im oben angesprochen Beispiel erfüllt das Objekt diese Bedingung, denn aufgrund der Eckpunkte (37, 41) und (37, 77) liegt eine repräsentative x-Koordinate (nämlich *x*=37) und zwei repräsentative y-Koordinaten (nämlich *y*=41, 77) entlang der beiden Dimensionen zwischen den maximalen und minimalen Koordinaten (20 ≤ *x* ≤ 60) und (30 ≤ *y* ≤ 90) des Vorauswahlbereichs.

Auf diese Weise wird sichergestellt, dass alle solchen Objekte als innerhalb eines mehrdimensionalen Vorauswahlbereichs liegend identifiziert werden, deren mehrdimensionale Ausdehnung (z.B. Fläche oder Volumen) mit dem Vorauswahlbereich überlappt und diese Objekte jedenfalls nicht vollständig außerhalb des Vorauswahlbereichs liegen.

Gemäß einer weiteren bevorzugten Ausführungsform der Erfindung werden die Koordinatenlisten derart geführt, dass sie die repräsentativen Koordinaten aller Objekte innerhalb der simulierten Umgebung umfassen. Die vollständige simulierte Welt wird gemäß dieser Ausführungsform also von den sortierten Koordinatenlisten erfasst. Dies ist ohne Verschwendung von Rechenkapazitäten und Gefährdung der Echtzeitfähigkeit möglich, denn neben der Aktualisierung der Koordinaten und Sortierung der Koordinatenlisten fallen keine weiteren Berechnungen an, sofern Objekte nicht in den Vorauswahlbereich eintreten oder ihn verlassen.

Da bei einem solchen Szenario aber dennoch oft die überwiegende Zahl der Objekte außerhalb des Vorauswahlbereichs liegt, wird besonders bevorzugt ein den Vorauswahlbereich umschließender Bereich definiert, um die Objekte zu beschränken, die von den Koordinatenlisten erfasst werden. Der umschließende Bereich kann großzügig und abhängig von der Größe des Vorauswahlbereichs bestimmt werden, etwa als sinnvolles Vielfaches der Größe des Vorauswahlbereichs. Der umschließende Bereich kann auch mit den Grenzen der simulierten Umgebung identisch sein.

Erfindungsgemäß werden die Koordinatenlisten und Objektidentifikationen zum aktuellen Zeitpunkt ausgehend von den Koordinatenlisten und Objektidentifikationen zum früheren Zeitpunkt aktualisiert. Gemäß einer besonders bevorzugten Ausführungsform der Erfindung ist es vorgesehen, als maximale und minimale Koordinaten des Vorauswahlbereichs die maximalen und minimalen Koordinaten des erscheinenden und des verschwindenden Abschnitts entlang der betreffenden Dimensionen in den Koordinatenlisten zu führen. Jede sortierte Koordinatenliste verzeichnet gemäß dieser Ausführungsform getrennt voneinander sowohl den erscheinenden als auch den verschwindenden Abschnitt mittels je zwei Koordinaten. Da der erscheinende und der verschwindende Abschnitt komponentenweise, das heißt bezüglich jeder Dimension separat, in den Koordinatenlisten identifiziert wird, kann man sich diese Abschnitte als Streifen entlang der betreffenden Dimension mit einer vorgegebenen Breite vorstellen.

Die Koordinaten der Objekte liegen dann entlang jeder Dimension entweder innerhalb des erscheinenden Abschnitts betreffend die jeweilige Dimension (und werden entsprechend gekennzeichnet) oder innerhalb des verschwindenden Abschnitts betreffend die jeweilige Dimension (und werden entsprechend gekennzeichnet) oder in keinem der beiden Abschnitte (und werden nicht gekennzeichnet). Nur die Koordinaten, die innerhalb des erscheinenden oder des verschwindenden Abschnitts liegen, werden bei der Aktualisierung der Koordinatenlisten im Übergang vom früheren zum aktuellen Zeitpunkt betrachtet, während die Koordinaten diesseits des verschwindenden Abschnitts und jenseits des erscheinen Abschnitts außerhalb des Vorauswahlbereichs liegen (bleiben) und die Koordinaten zwischen den beiden Abschnitten innerhalb des Vorauswahlbereichs liegen (bleiben). Die Rechenkapazitäten können auf diese Weise erfindungsgemäß überwiegend für die Aktualisierung der Objekte innerhalb des erscheinenden und des verschwindenden Abschnitts eingesetzt werden, denn nur dort ergeben sich Änderungen bei der Menge O_{VAB} der Objekte innerhalb des Vorauswahlbereichs.

Gemäß dieser Ausführungsform werden ausgehend von den Kennzeichnungen der Objekte in den Koordinatenlisten neue Objektidentifizierungen angelegt bzw. hinzugefügt, wenn wenigstens eine repräsentative Koordinate eines zum früheren Zeitpunkt nicht identifizierten Objekts entlang aller Dimensionen in dem erscheinenden Abschnitt liegt. Sofern als repräsentative Koordinaten die maximalen und minimalen Koordinaten der Objekte verwendet werden, wird ein Objekt bereits dann als neu in den Vorauswahlbereich eintretend identifiziert, wenn zumindest ein mehrdimensionaler Eckpunkt des Objekts innerhalb des mehrdimensionalen erscheinenden Abschnitts liegt. Sollte ein solches Objekt bereits als innerhalb des Vorauswahlbereichs liegend identifiziert sein, weil zuvor bereits andere Eckpunkte in den Vorauswahlbereich eingetreten sind, so ändert sich die Identifizierung dieses Objekts nicht.

Entsprechend ist eine notwendige Bedingung zur Identifizierung eines Objekts als den Vorauswahlbereich verlassend, wenn wenigstens ein mehrdimensionaler Eckpunkt oder eine Mehrzahl von mehrdimensionalen Eckpunkten oder alle mehrdimensionalen Eckpunkte des Objekts entlang aller Dimensionen innerhalb des mehrdimensionalen verschwindenden Abschnitts liegt. Die Identifikation eines solchen Objekts wird entfernt, sofern abgesehen von dem Eckpunkt in dem verschwindenden Abschnitt keine weiteren Eckpunkte des Objekts mehr innerhalb des Vorauswahlbereichs liegen.

Gemäß einer besonders bevorzugten Ausführungsform der Erfindung repräsentieren die maximalen und minimalen Koordinaten des erscheinenden und des verschwindenden Abschnitts erscheinende und verschwindende Streifen, die über die gesamte Länge entlang der jeweiligen Dimension verlaufen. Die Streifen werden hierbei komponentenweise, das heißt bezüglich jeder Dimension separat, in den Koordinatenlisten identifiziert und verlaufen entlang der betreffenden Dimension mit einer vorgegebenen Breite. Der erscheinende Streifen ist also nicht auf solche Bereiche beschränkt, die zum aktuellen Zeitpunkt tatsächlich innerhalb des Vorauswahlbereichs liegen, sondern er setzt diese Bereiche vielmehr über die gesamte Ausdehnung entlang der betreffenden Dimension fort. Ebenso ist der verschwindende Streifen nicht auf solche Bereiche beschränkt, die zum früheren Zeitpunkt tatsächlich innerhalb des Vorauswahlbereichs lagen, sondern auch er setzt diese Bereiche über die gesamte Ausdehnung entlang der betreffenden Dimension fort.

Dadurch werden die notwendigen Berechnungen einfacher, weil viele Nebenbedingungen wegfallen, und es wird Rechenkapazität zugunsten der Echtzeitfähigkeit eingespart.

Entsprechend der Gestalt der Streifen werden Objekte in den Koordinatenlisten gekennzeichnet, wenn zumindest eine repräsentative Koordinate des betreffenden Objekts innerhalb des erscheinenden Streifens liegt. Entsprechend werden Kennzeichnungen von Objekten unter Umständen aus den Koordinatenlisten entfernt, wenn eine repräsentative Koordinate des betreffenden Objekts innerhalb des verschwindenden Streifens liegt. Auf diese Weise sind in den jeweiligen Koordinatenlisten immer all jene Objekte gekennzeichnet, die entweder in dem erscheinenden Streifen liegen oder die in dem Überlappungsbereich liegen, der sowohl Teil des Vorauswahlbereichs zum früheren also auch zum aktuellen Zeitpunkt ist.

Zur Aktualisierung der identifizierten Objekte anhand der Kennzeichnungen in den einzelnen Koordinatenlisten, also zum Entscheid, welche in einzelnen Koordinatenlisten bezüglich der betreffenden Dimension gekennzeichneten Objekte tatsächlich innerhalb des mehrdimensionalen Vorauswahlbereichs liegen, wird vorzugsweise eine spezifische Datenstruktur der relevanten Objekte eingesetzt. Die relevanten Objekte sind diejenigen Objekte, deren Kennzeichnung sich zum aktuellen Zeitpunkt gegenüber dem früheren Zeitpunkt geändert hat. Eine solche Änderung der Kennzeichnung tritt auf, wenn entweder ein Objekt (bzw. dessen repräsentative Koordinaten) von dem erscheinenden Streifen erfasst wird, es also zum aktuellen Zeitpunkt potentiell den Vorauswahlbereich betritt, oder wenn ein Objekt (bzw. dessen repräsentative Koordinaten) von dem verschwindenden Streifen erfasst wird, es also zum aktuellen Zeitpunkt potentiell den Vorauswahlbereich verlässt.

Die Datenstruktur gibt dann für alle relevanten Objekte vorzugsweise diejenigen Dimensionen an, entlang derer das Objekt in den jeweiligen Koordinatenlisten gekennzeichnet ist. Jedes relevante Objekt ist in der Datenstruktur dann entweder in allen Dimensionen gekennzeichnet, etwa wenn es innerhalb des erscheinenden Abschnitts und somit innerhalb des Vorauswahlbereichs zum aktuellen Zeitpunkt liegt, oder es ist in einigen aber nicht allen Dimensionen gekennzeichnet, etwa wenn es innerhalb des verschwindenden Abschnitts oder innerhalb des Bereichs des erscheinenden Streifens liegt, der nicht Teil des erscheinenden Abschnitts ist.

Entsprechend werden die Objektidentifikationen, also die Menge O_{VAB} aller im Vorauswahlberiech liegenden Objekte basierend auf der Datenstruktur derart angepasst, dass Objektidentifikationen von relevanten Objekten hinzugefügt werden, die entlang aller Dimensionen gekennzeichnet sind, und Objektidentifikationen von relevanten Objekten entfernt werden, die entlang zumindest einer Dimension nicht gekennzeichnet sind.

Die Datenstruktur hilft, die erforderlichen Berechnungen effizienter und ressourcenschonender durchzuführen und das Ziel der Echtzeitfähigkeit auch bei großen Objektmengen und/oder beweglichen Objekten zu erreichen.

Gemäß einer weiteren bevorzugten Ausführungsform der Erfindung werden Verkehrsszenen mit Fahrzeugen und/oder Fußgängern als Objekte aus der Sicht eines Referenzfahrzeugs simuliert, an dem der Sensor angebracht ist. Der Vorauswahlbereich wird dann derart bestimmt, dass er Fahrzeuge und/oder Fußgänger erfasst, die innerhalb des Sensorerfassungsbereich liegen. Die betreffenden statischen oder beweglichen Objekte bewegen sich dann innerhalb der simulierten Umgebung und können u.a. aufgrund der Eigenbewegung des Referenzfahrzeugs situationsabhängig in den Vorauswahlbereich eintreten oder ihn verlassen, was das erfindungsgemäße Verfahren in der oben geschilderten Art und Weise berücksichtigt.

Gemäß einer weiteren bevorzugten Ausführungsform der Erfindung wird die Breite der erscheinenden und/oder verschwindenden Streifen abhängig von der Bewegung der Objekte und des Sensors relativ zueinander zwischen zwei Zeitpunkten bestimmt. Je größer die Bewegung ist bzw. je schneller sie sich bewegen, desto breiter sind vorzugsweise die Streifen. Dadurch wird das erfindungsgemäße Verfahren besonders an Verkehrssituationen angepasst, die von vielen sich bewegenden bzw. von sich schnell bewegenden Objekten geprägt sind. Die Breiten der Streifen sind dann bevorzugt ausreichend, um nicht nur die Eigenbewegung des Referenzfahrzeugs zu berücksichtigen, sondern auch die Relativbewegungen der weiteren Objekte.

Bevorzugt werden die Breiten der erscheinenden und/oder verschwindenden Streifen so angepasst, dass alle Objekte, die zwischen dem früheren und dem aktuellen Zeitpunkt aus dem Vorauswahlbereich verschwinden, also von dem verschwindenden Abschnitt erfasst werden, und alle Objekte, die zwischen dem früheren und dem aktuellen Zeitpunkt in dem Vorauswahlbereich erscheinen, also von dem erscheinenden Abschnitt erfasst werden. Als Grundlage für diese Anpassung kann zum Beispiel die Geschwindigkeit des schnellsten Objekts verwendet werden, die bei jeder Aktualisierung neu ermittelt werden kann.

Gemäß einer bevorzugten Ausführungsform der Erfindung werden die Breite des erscheinenden Abschnitts und/oder die Breite des verschwindenden Abschnitts und/oder die Zeitverzögerung zwischen dem früheren und dem aktuellen Zeitpunkt abgestimmt ausgewählt. Diese Abstimmung ist bevorzugt derart, dass Objekte in Echtzeit identifiziert bzw. bestimmt werden, die sich zum aktuellen Zeitpunkt im Vorauswahlbereich bzw. im Sensorerfassungsbereich befinden. Die Zeitverzögerung liegt hierbei zwischen 0,5 ms und 5 ms, vorzugsweise zwischen 0,5 ms und 2 ms, besonders bevorzugt zwischen 0,5 ms und 1,5 ms und am meisten bevorzugt bei etwa 1 ms.

Gemäß einer weiteren bevorzugten Ausführungsform der Erfindung werden Bewegungen von Objekten und/oder des Sensors relativ zueinander derart berücksichtigt, dass die Koordinatenlisten bei jeder Aktualisierung erneut sortiert werden. Die sich relativ zueinander bewegenden Objekte werden dadurch komponentenweise wieder in die richtige Ordnung gebracht, von der ausgehend das erfindungsgemäße Verfahren fortgesetzt werden kann.

Gemäß einem zweiten Aspekt der vorliegenden Erfindung wird ein Simulationssystem vorgeschlagen, welches derart konfiguriert ist, dass es Objekte erkennt, die von einem Sensor erfasst werden und die sich relativ zum Sensor und ggf. relativ zueinander innerhalb der simulierten Umgebung bewegen. Der Sensor ist hierbei vorzugsweise mit einem Referenzfahrzeug assoziiert oder verbunden, aus dessen Sicht und zu dessen Nutzen die simulierte Objekterkennung durchgeführt wird. Das erfindungsgemäße Simulationssystem ist vorzugsweise als ein Rechner- oder Computersystem realisiert, welches mit allen üblichen Komponenten ausgestattet ist, welche zur rechnergestützten Durchführung der Simulation notwendig sind, etwas einen oder mehrere Prozessoren zum Ausführen von Computer-Programmen, einer geeignete Speicheranordnung sowie Schnittstellen und Bedienmöglichkeiten oder dergleichen.

Bei einem Einsatz des Systems im Rahmen einer realen Fahrzeugsteuerung kann das System ferner Datenkommunikationsverbindung zwischen dem erfindungsgemäßen System und dem Referenzfahrzeug und ggf. dessen Fahrzeugsteuerung sowie dem Sensor umfassen, um Sensordaten entgegenzunehmen und Steuerbefehle zu übertragen.

Das erfindungsgemäß Simulationssystem umfasst insbesondere eine Prozessor- oder Verarbeitungseinrichtung, die derart konfiguriert ist, dass
(a) Objekte identifiziert werden, die innerhalb eines Vorauswahlbereichs in der simulierten Umgebung liegen, wobei der Vorauswahlbereich einen Erfassungsbereich des Sensors umfasst; und
(b) bestimmt wird, ob ein Objekt in dem Vorauswahlbereich von dem Sensorerfassungsbereich erfasst wird.

Erfindungsgemäß ist die Verarbeitungseinrichtung ferner derart konfiguriert, dass Objekte identifiziert werden, die zu einem aktuellen Zeitpunkt in dem Vorauswahlbereich liegen, indem Listen mit sortierten Koordinaten entlang von Dimensionen der simulierten Umgebung geführt werden, welche solche Objekte identifizieren, die zu einem früheren Zeitpunkt in dem Vorauswahlbereich lagen, und die Koordinatenlisten aktualisiert werden.

Unabhängig davon, wie genau die Objektidentifizierungen realisiert werden, werden die Koordinatenlisten erfindungsgemäß zum aktuellen Zeitpunkt aktualisiert, indem
(a1) Objektidentifizierungen von Objekten hinzugefügt werden, welche zum aktuellen Zeitpunkt in einem erscheinenden Abschnitt des Vorauswahlbereichs liegen, der zum früheren Zeitpunkt noch nicht von dem Vorauswahlbereich erfasst wurde und /oder
(a2) Objektidentifizierungen von Objekten entfernt werden, welche zum früheren Zeitpunkt in einem verschwindenden Abschnitt des Vorauswahlbereichs lagen, der zum aktuellen Zeitpunkt nicht mehr von dem Vorauswahlbereich erfasst wird.

Die Prozessor- oder Verarbeitungseinrichtung ist im Übrigen vorzugsweise konfiguriert, sämtlich zuvor beschriebenen Schritte gemäß dem ersten Aspekt der Erfindung auszuführen bzw. im Rahmen der beschriebenen Simulation umzusetzen.

Gemäß einem dritten Aspekt der vorliegenden Erfindung wird ein Computerprogrammprodukt mit Befehlen bereitgestellt, die bei Ausführung des Programms durch einen Computer diesen Computer veranlassen, das Verfahren gemäß dem ersten Aspekt der Erfindung auszuführen. Das Computerprogrammprodukt bildet hierbei bevorzugt zusammen mit einem Prozessor eine Verarbeitungseinrichtung eines Simulationssystems gemäß dem zweiten Aspekt der vorliegenden Erfindung.

Weitere Aspekte, Merkmale und Vorteile der vorliegenden Erfindung werden anhand der nachfolgenden detaillierten Beschreibung von bevorzugten Ausführungsformen und Ausführungsvarianten der vorliegenden Erfindung anhand der beiliegenden Figuren deutlich werden, welche zeigen:
- Fig. 1: eine Illustration einer simulierten Umgebung;
- Fig. 2: eine schematische Darstellung eines erfindungsgemäßen Simulationssystems;
- Fig. 3: Beispiele von Situationen in der simulierten Umgebung und im Zusammenhang mit dem erfindungsgemäßen Vorauswahlbereich;
- Fig. 4: eine schematische Darstellung einer bevorzugten Ausführungsform des erfindungsgemäßen Verfahrens;
- Fig. 5: eine schematische Darstellung einer bevorzugten Ausführungsform des erfindungsgemäßen Verfahrens;
- Fig. 6: eine Illustration einer simulierten Umgebung mit erfindungsgemäßen erscheinenden und verschwindenden Streifen; und
- Fig. 7: ein Ablaufdiagram betreffend das erfindungsgemäße Verfahren.

Anhand der Zeichnungen, die spezifische Ausführungsbeispiele der Erfindung illustrieren, wird die Erfindung nachfolgend beispielhaft erläutert. Diese Ausführungsbeispiele werden detailliert beschrieben und ermöglichen dem Fachmann die technische Umsetzung der Erfindung. Die beschriebenen Ausführungsformen schließen sich nicht gegenseitig aus, sondern ergänzen sich vielmehr. Insofern ist ein bestimmtes Merkmal, eine bestimmte Struktur oder eine bestimmte Eigenschaft, die im Zusammenhang mit einer Ausführungsform beschrieben wird, auch im Zusammenhang mit anderen Ausführungsformen umsetzbar, ohne vom Gegenstand der Erfindung abzuweichen. Ferner kann die Position oder Anordnung einzelner Elemente oder Schritte innerhalb der beschriebenen Ausführungsformen selbstverständlich modifiziert werden, ohne vom Gegenstand der Erfindung abzuweichen. Deshalb ist die nachfolgende Beschreibung der anliegenden Figuren nicht beschränkend zu verstehen, denn der Umfang der Erfindung wird ausschließlich durch die beigefügten Ansprüche definiert und umfasst auch Varianten und Äquivalente, die nachfolgend nicht ausdrücklich beschrieben werden.

Fig. 1 illustriert eine simulierte, komplexe Welt bzw. eine simulierte Umgebung 100 mit einem großen Straßennetz und vielen, sich teilweise relativ zueinander bewegenden Objekten 110, wie etwa Fahrzeugen, Verkehrsschildern und Ampeln, Straßenbegrenzungen und Leitplanken, angrenzenden Bauten, weiteren Verkehrsteilnehmern und dergleichen.

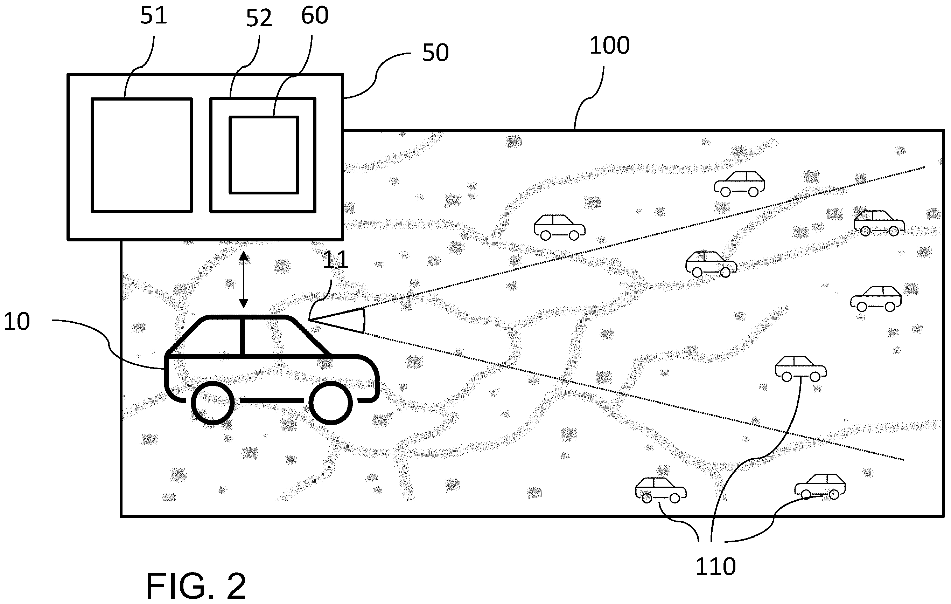

Rechner-gestützte Verkehrssimulationen - auch als "Automotive Simulation Model" (ASM) bezeichnet - werden eingesetzt, um mit Hilfe von solchen simulierten Umgebungen 100 zum Beispiel Sensoren für Fahrzeuge sowie deren Sensordatenverarbeitung und Wechselwirkungen mit der Fahrzeugsteuerung zu entwickeln, zu optimieren und zu testen, bevor sie in der Realität getestet und schließlich eingesetzt werden. Wichtig ist hierbei, dass die von entsprechend simulierten ASM-Sensoren (vgl. Bezugszeichen 11 in Fig. 2) innerhalb der simulierten Umgebung 100 erhobenen Sensordaten, etwa betreffend andere Verkehrsteilnehmer und Objekte 110, in Echtzeit verarbeitet werden können, um den späteren Einsatz der Sensordatenverarbeitung als Echtzeitapplikation in einem realen Fahrzeug zu ermöglichen. Besonders bei Verkehrsszenarien mit sehr vielen statischen und/oder dynamischen Objekten 110 bedarf es hierzu der effektiven Optimierung der Sensordatenerfassung und Sensordatenverarbeitung.

Bei der Simulation eines ASM-Sensors, der etwa an einem Referenzfahrzeug 10 befestigt ist und in dieser Umgebung 100 betrieben wird, wird geprüft, welche Objekte aus der Menge Owaller Objekte 110 der simulierten Welt im Erfassungsbereich 20 des Sensors, im sogenannten "Sensor Scope", liegen und welche Eigenschaften diese Objekte 110 haben. Zur Vermeidung überflüssiger Berechnungen zulasten der Echtzeitfähigkeit der Sensordatenauswertung werden im Rahmen einer "Broad Phase" mittels einfacher Ansätze zunächst diejenigen Objekte in Ow identifiziert, die überhaupt potentiell im Sensorerfassungsbereich 20 liegen können. Hierfür wird um den in Fig. 1 kegelförmig angedeuteten Sensorerfassungsbereich 20 ein Vorauswahlbereich 30 (VAB) mit einfacher Geometrie gelegt, z.B. in Form eines Kreises oder eines Rechtecks, und es wird ermittelt, welche Teilmenge O_{VAB} der Menge Owim Vorauswahlbereich 30 liegt. Diese Teilmenge O_{VAB} wird im Anschluss in einer "Narrow Phase" detailliert weiterverarbeitet. Nur aufgrund der vorgeschalteten "Broad Phase" sind Sensorsimulationen überhaupt potentiell echtzeitfähig.

Fig. 2 zeigt ein rechnergestütztes Simulationssystem 50 umfassend die üblichen Komponenten, wie zum Beispiel Schnittstellen, Ein- und Ausgabeeinrichtungen, einen oder mehrere Prozessoren 51 und eine Speichereinrichtung bzw. hierarchie 52 mit darin abgelegten Computerprogrammen, die von dem Prozessor 51 ausgeführt werden können. Unter anderem liegt in dem Speicher 52 eine Simulationssoftware 60 in Form eines Computerprograms mit ausführbarem Programmcode vor, welche die oben angesprochene Rechner-gestützte ASM-Verkehrssimulation vornimmt und die simulierte Welt 100 als Echtzeitsimulation erzeugt und betreibt. Wie bereits aus Fig. 1 bekannt, existieren in der simulierten Welt 100 statische und/oder dynamische Objekte 110 sowie ein Referenzfahrzeug 10 mit einem Sensor 11, aus dessen Perspektive die simulierten Welt 100 betrachtet und analysiert wird. Dieses Szenario dient unter anderem dazu, den Sensor 11 und dessen Erfassungsbereich 20 sowie den Vorauswahlbereich 30 zu simulieren, deren Echtzeitfähigkeit zu prüfen und durch Optimierung sicherzustellen.

Ausgangspunkt der Erfindung und der nachfolgend beschriebenen erfindungsgemäßen Ausführungsformen ist die Erkenntnis, dass bei typischen Abtastzeiten in der "Broad Phase" von wenigen Millisekunden der Vorauswahlbereich 30 des Fahrzeugsensors 11 eine sehr geringe Distanz zwischen zwei aufeinanderfolgenden Zeit- bzw. Berechnungsschritten zur Sensordatenerfassungen und Datenauswertung zurücklegt. Aus einer Fahrzeuggeschwindigkeit von 100 km/h und einer Abtastzeit von 1 ms folgt beispielsweise eine zurückgelegte Strecke von etwa 0,0278 Metern in Fahrtrichtung. Bei den üblichen Dimensionen der Objekte 110 und des Vorauswahlbereichs 30 im Bereich von wenigen hundert Metern verbleiben die Objekte 110 typischerweise über viele Zeit-/Berechnungsschritte im Vorauswahlbereich 30. Die Menge O_{VAB} der im Vorauswahlbereich 30 liegenden Objekte 110 ändert sich damit beim Übergang des Vorauswahlbereich 30 von einem früheren Zeitpunkt tₙ₋₁ zu einem darauffolgenden, aktuellen Zeitpunkt tₙ nur wenig und häufig sogar gar nicht.

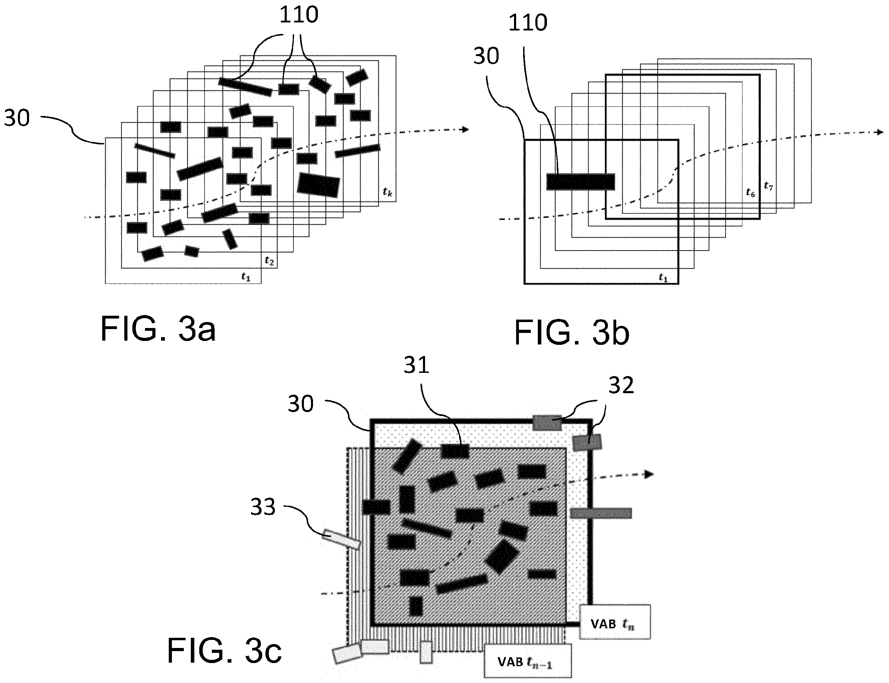

Diesen Sachverhalt illustriert die Fig. 3a, die einen rechteckigen Vorauswahlbereich 30 zeigt, der sich entlang einer als geschwungene Pfeillinie angedeuteten Bewegungstrajektorie des Referenzfahrzeugs 10 und Sensors 11 durch die simulierte Umgebung 100 mit vielen verschiedenen Objekten 110 in diskreten Berechnungsschritten zu den Zeitpunkten t₁, t₂, ..., tₙ₋₁, tₙ bewegt. Die Fig. 3b zeigt ergänzend, wie ein einzelnes Objekt 110 über mehrere Berechnungsschritte hinweg, nämlich vom Zeitpunkt t₁ bis zum Zeitpunkt t₆, im Vorauswahlbereich 30 verbleibt.

Die Erfindung nutzt solche geringen Änderungen der Menge der Objekte im Vorauswahlbereich 30 zwischen zwei aufeinanderfolgenden Berechnungsschritten tₙ₋₁ und tₙ aus, indem entlang jeder Dimension nur diese Änderungen betrachtet werden, nicht aber all jene Objekte 110, die unverändert im Vorauswahlbereich 30 oder außerhalb des Vorauswahlbereichs 30 verbleiben. Die Menge O_{VAB} wird deshalb zum aktuellen Zeitpunkt tₙ dadurch gebildet, dass in einem ersten Schritt die Menge O_{VAB} des früheren Zeitpunkt tₙ₋₁ übernommen wird und diese Menge in einem zweiten Schritt betreffend die neu erscheinenden Objekte und die verschwundenen Objekte aktualisiert wird. Fig. 3c zeigt, dass die Menge O_{VAB} zum aktuellen Zeitpunkt tₙ aus Objekten 31 besteht, die im Vorauswahlbereich 30 verbleiben, sowie aus Objekten 32, die neu in diesen eintreten, und Objekten 33, die den Vorauswahlbereich verlassen haben.

Auf diese Weise werden die Rechenkapazitäten des Simulationssystems 50 geschont und Echtzeitfähigkeit hergestellt, denn es fallen nur noch Berechnungen betreffend die Verarbeitung der erscheinenden Objekte 32 und der verschwindenden Objekte 33 an. Unabhängig von der Größe der Menge Owaller Objekte 110 in der simulierten Umgebung 100 kommen häufig nur wenige oder gar kein Objekte 32, 33 hinzu oder verlassen den Vorauswahlbereich 30, so dass der Aufwand zur Berechnung der Menge O_{VAB} sehr gering und unabhängig von der Menge O_{W} ist. Auf diese Weise schafft die Erfindung die Voraussetzungen für die Echtzeitfähigkeit der Sensordatenerfassung und -auswertung.

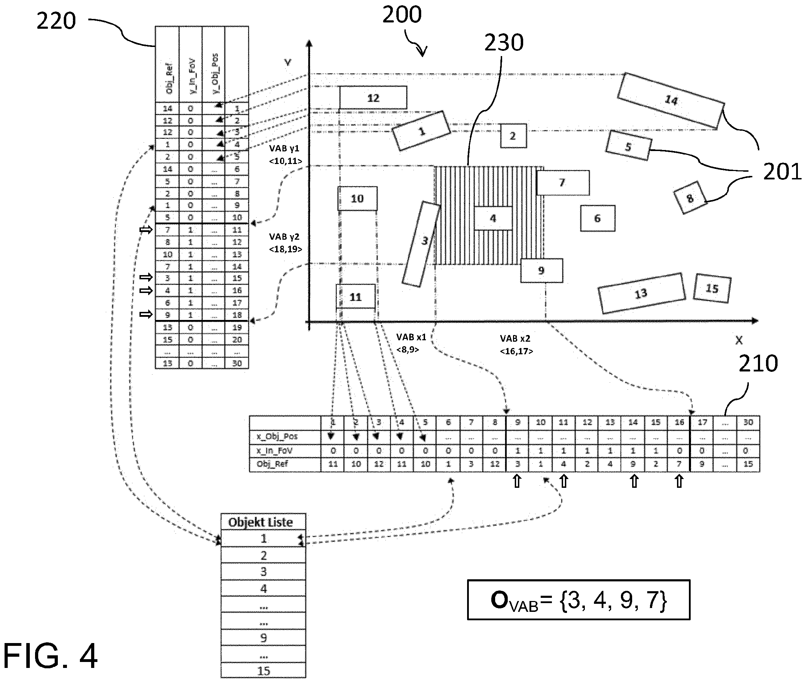

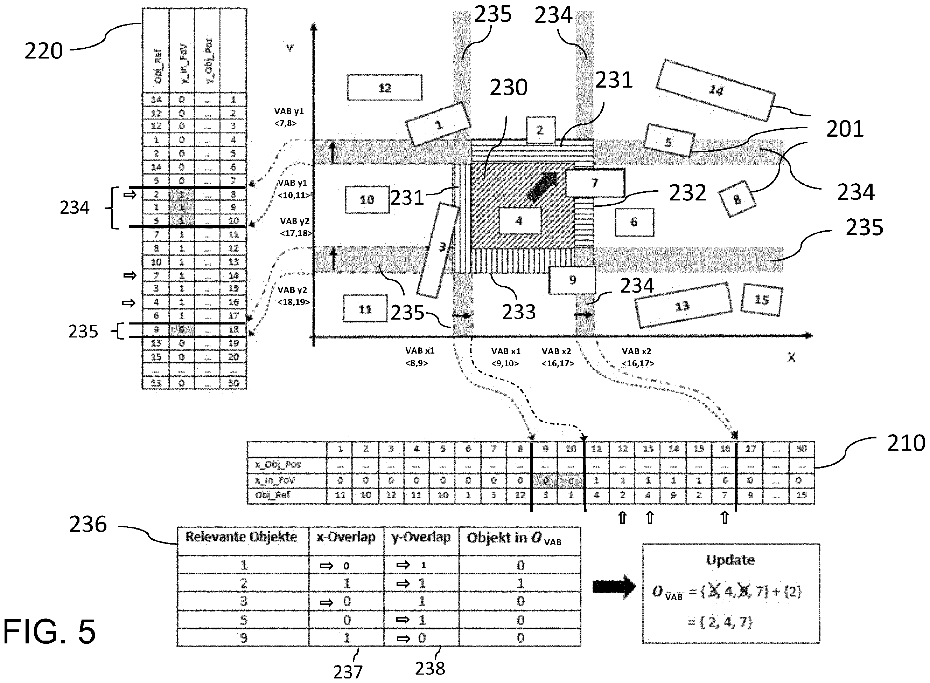

Die Figuren 4 und 5 illustrieren das erfindungsgemäße Verfahren anhand einer besonders bevorzugten Ausführungsform nebst einiger Ausführungsalternativen im Detail. Prinzipiell ist die Erfindung nicht beschränkt auf eine bestimmte Dimensionalität der simulierten Umgebung 200, etwa auf eine dreidimensionale Umgebung 200 aufgespannt von x-, y- und z-Koordinaten, sondern kann, sollte eine Anwendung dies erfordern, im n-dimensionalen Raum umgesetzt werden. Aus Gründen der Anschaulichkeit beschränken sich die Beispiele der Figuren 4 und 5 jedoch auf eine zweidimensionale Umgebung 200 aufgespannt durch x- und y-Koordinaten. Die in der simulierten Umgebung 200 simulierten Objekte 201 sind insofern ebenso zweidimensional, wie der Vorauswahlbereich 230, und werden durch eine oder mehrere repräsentative (x, y) Koordinaten beschrieben, wie etwa deren geometrischen Schwerpunkt oder, wie in Fig. 4 und 5, durch vier zweidimensionale Eckpunkte, die jeweils den Eckpunkten einer Bounding Box eines Objekts entsprechen.

Vor diesem Hintergrund zeigt Fig. 4 zwei Koordinatenlisten, nämlich eine x-Koordinatenliste 210 und eine y-Koordinatenliste 220, welche einerseits die x-Komponenten (in der Liste 210) und andererseits die y-Komponenten (in der Liste 220) der minimalen und maximalen Koordinaten aller statischen und ggf. dynamischen Objekte 201 zu einem aktuellen Zeitpunkt tₙ verzeichnet. Das sind im Beispiel der Fig. 4 deren repräsentative Koordinaten in Form der Eckpunkte. Die beiden Listen 210, 220 sind jeweils indiziert von 1 bis 30 und enthalten für jedes Objekt u.a. die genau x-Koordinate ("x_Obj_Pos") bzw. genau y-Koordinate ("y_Obj-Pos"). Die Koordinatenlisten 210, 220 sind zu jedem Zeitpunkt auf- oder absteigend und unabhängig von der Sortierung der jeweils anderen Liste 220, 210 sortiert. Sie werden immer dann erneut sortiert, wenn sich die Listen 210, 220 aufgrund von Bewegungen des Referenzfahrzeugs 10 und/oder von Bewegungen der Objekte 201 relativ zueinander ändern. Der Einfachheit halber werden die x- und y-Komponenten der Koordinaten nachfolgend schlicht als "Koordinaten" bezeichnet, sofern aus dem Zusammenhang ersichtlich ist, dass einzelne Komponenten dieser Koordinaten gemeint sind.

Die Listen 210, 220 umfassen mehrere Zeilen (x-Liste 201) bzw. Spalten (y-Liste 220) mit Attributen der einzelnen, zeilenweise angeordneten sortierten Koordinaten, unter anderem jeweils auch eine Spalte "Obj_Ref" mit einer eineindeutigen Nummer oder Bezeichnung der betreffenden Objekte 201. Aus Gründen der Berechnungseffizient beim Zugriff auf Objektattribute werden die eineindeutigen Nummern oder Bezeichnung der Objekte 201 in einer übergeordneten "Objekt Liste" zusammengetragen, die auf die zugehörigen Einträge betreffend die einzelnen Objekte in den Koordinatenlisten 210, 220 verweist bzw. diese referenziert.

Die Spalten "x_Obj_Pos" und "y_Obj_Pos" der Koordinatenlisten 210, 220 verzeichnen für jedes Objekt 201 die entsprechenden Koordinaten (bzw. deren x-, y-Komponenten in den Koordinatenlisten 210, 220. Strichlinierte gerade Pfeile in Fig. 4 deutet das komponentenweise Einfügen von Koordinaten der Objekte Nr. 10, 11, 12 in die x-Koordinatenlisten 210 und der Objekte Nr. 1, 2, 12, 14 in die y-Koordinatenlisten 220 an.

Da statische Objekte 201 mangels Bewegung in der Umgebung 200 Ihre Positionen während der Simulation nicht ändern, werden keine Rechenkapazitäten für die Sortierung der Listen 210, 220 benötigt, wenn alle Objekte ihre, durch die Sortierung ausgedrückten relativen Positionen beibehalten. Selbst wenn sich der Vorauswahlbereich 230 in der simulierten Umgebung 200 bewegt, ändert sich die Reihenfolge der Objekte in den sortierten Listen 210, 220 nicht, denn die Positionen der Objekte relativ zueinander entlang einer Dimension bleiben unverändert. Insofern reicht im Falle von ausschließlich statischen Objekten 201 eine initiale Befüllung und Sortierung der Koordinatenlisten 210, 220 aus. Die initiale Befüllung und Sortierung kann im Rahmen einer nicht Performance-sensitiven Vorschaltphase durchgeführt werden, welche die nachgeordnete eigentliche Simulation mit der "Broad Phase" nicht betrifft.

Der Vorauswahlbereich 230 wird in Fig. 4 durch vier Koordinaten (x1, y1), (x1, y2), (x2, y1) und (x2, y2) beschrieben. Die Komponenten x1 und x2 repräsentieren hierbei die minimalen und maximalen x-Koordinaten und die Komponenten y1 und y2 repräsentieren die minimalen und maximalen y-Koordinaten des Vorauswahlbereichs 230. In Fig. 4 werden diese Komponenten mit "VAB x1", "VAB x2", "VAB y1", "VAB y2" bezeichnet und in die jeweiligen sortierten Koordinatenlisten 201, 220 durch Kennzeichnungen "1" in den Spalten "x_Obj_Pos" (Indizes 9 bis 16 der x-Liste 201) und "y_Obj_Pos" (Indizes 11 bis 18 der y-Liste 220) kenntlich gemacht.

Gemäß der in Fig. 4 dargestellten Situation liegt die untere Grenze bezüglich der x-Komponente (minimale x-Koordinate) des Vorauswahlbereichs 230 zwischen den Indizes 8 und 9 und die obere Grenze bezüglich der x-Komponente (maximale x-Koordinate) liegt zwischen den Indizes 16 und 17. Entsprechen liegen die untere und obere Grenze des Vorauswahlbereichs 230 betreffend die y-Komponente zwischen den Indizes 18 und 19 einerseits sowie den Indizes 10 und 11 andererseits. Auf diese Weise kennzeichnet die x-Koordinatenliste 210 die Objekte Nr. 3, 1, 4, 2, 4, 9, 2, 7 (x-Indizes 9 bis 16) als zwischen "VAB x1" und "VAB x2" in einem Streifen entlang der x-Dimension (bzw. x-Achse) liegend. Entsprechend weist die y-Koordinatenliste 220 die Objekte Nr. 7, 8, 10, 7, 3, 4, 6, 9 (y-Indizes 11 bis 18) als zwischen "VAB y1" und "VAB y2" in einem Streifen entlang der y-Dimension (bzw. y-Achse) liegend aus.

Ein Objekt 201 liegt dann im Vorauswahlbereich 230, wenn zumindest eine repräsentative x-Koordinate in der x-Koordinatenlisten 210 mit "1" gekennzeichnet ist (auch als x-Overlap bezeichnet) und gleichzeitig zumindest eine repräsentative y-Koordinate in der y-Koordinatenlisten 220 mit "1" gekennzeichnet ist (auch als y-Overlap bezeichnet). Diese Bedingung wird auch als "Overlap-Bedingung" bezeichnet. Da die Listen 210, 220 und weiteren Datenstrukturen über Verweise mit der "Objekt Liste" verknüpft sind, ist die genannte Overlap-Bedingung für eine Identifikation (nämlich je eine Kennzeichnung in jeder Dimension) für ein gegebenes Objekt 201 unmittelbar und weitgehend ohne Einsatz von Rechenkapazität prüfbar.

Die in jeder Koordinatenliste mindestens einmal gekennzeichneten Objekte, in Fig. 4 also die Objekte Nr. 3, 4, 9, 7, werden dadurch erfindungsgemäß als im Vorauswahlbereich liegend identifiziert (vgl. Doppelpfeile an den Koordinatenlisten 210, 220 in Fig. 4). Diese Objektidentifikationen können entweder, wie im Ausführungsbeispiel nach Fig. 4, allein in der doppelten (bzw. n-fachen) Kennzeichnung bestehen, oder es kann eine separate Liste der identifizierten Objekte geführt werden, die ähnlich der "Objekt Liste" auf die identifizierten Objekte in den Koordinatenlisten 210, 220 verweiset. Alternativ kann die "Objekt Liste" eine weitere Spalte mit den Objektidentifizierungen umfassen.

Bei der nachfolgenden Beschreibung der Aktualisierung der Koordinatenlisten, Kennzeichnungen und Objektidentifikationen anhand der Fig. 5 wird angenommen, dass Fig. 4 die Situation zu einem früheren Zeitpunkt tₙ₋₁ darstellt und Fig. 5 die Situation zu einem unmittelbar darauffolgenden aktuellen Zeitpunkt tₙ. Zwischen diesen Zeitpunkten verändert sich der Vorauswahlbereich 230 (Zeitpunkt tₙ₋₁) in Pfeilrichtung zum Vorauswahlbereich 231 (Zeitpunkt tₙ). Erfindungsgemäß wird die Identifikation nur von solchen Objekten 201 geprüft und ggf. geändert, die zumindest teilweise in einem erscheinenden Abschnitt 232 oder einem verschwindenden Abschnitt 233 liegen. Der erscheinende Abschnitt 232 ist derjenige winkelförmige, schraffierte Bereich in Fig. 5, der von dem Vorauswahlbereich 231 (Zeitpunkt tₙ) erfasst wird, nicht aber von dem Vorauswahlbereich 230 (Zeitpunkt tₙ₋₁). Der verschwindende Abschnitt 233 ist derjenige winkelförmige, schraffierte Bereich in Fig. 5, der von dem Vorauswahlbereich 230 (Zeitpunkt tₙ₋₁) erfasst war, nicht aber mehr von dem Vorauswahlbereich 231 (Zeitpunkt tₙ).

Dies wird erreicht, indem nur diejenigen Objekte 231 untersucht werden, die potentiell einen Beitrag zum geänderten Vorauswahlbereich 231 und somit zum erscheinenden Abschnitt 232 und zum verschwindenden Abschnitt 233 leisten können. Dies sind erfindungsgemäß diejenigen Objekte 201, die in den beiden erscheinenden Streifen 234 und den beiden verschwindenden Streifen 235 liegen, die sich innerhalb der jeweiligen Streifenbreite in x- bzw. y-Ausdehnung über die gesamte Länge der jeweils wechselweise anderen Dimension (bzw. Achse) erstrecken. Mit anderen Worten, die erscheinenden und verschwindenden Streifen 234, 235 betreffen diejenigen Objekte 201, die komponentenweise zumindest eine repräsentative Koordinate besitzen, welche zwischen den maximalen und minimalen Koordinaten - also innerhalb - der betreffenden Streifen liegen.

In den beiden Koordinatenlisten 210, 220 sind die Streifen 234, 235 wie folgt lokalisiert: In der y-Koordinatenliste umfasst der horizontale erscheinende Streifen 234 die Objekte Nr. 2, 1, 5 (Indizes 8 bis 10) und der horizontale verschwindende Streifen 235 umfasst das Objekt 9 (Index 18). In der x-Koordinatenliste ist der vertikale erscheinende Streifen 234 leer (d.h. keine repräsentative Koordinate eines Objekts liegt in diesem Streifen) und der vertikale verschwindende Streifen 235 umfasst die Objekte 3, 1 (Indizes 9, 10).

Erfindungsgemäß wird geprüft, ob diese Objekte, nämlich die Objekte Nr. 1, 2, 3, 5, 9 vermittels der erscheinenden oder verschwindenden Streifen 234, 235 der beiden Koordinatenlisten 220, 230, neu in den Vorauswahlbereich 231 zum Zeitpunkt tₙ eingetreten sind oder den Vorauswahlbereich 230 zum Zeitpunkt tₙ₋₁ verlassen haben und die Objektidentifikationen entsprechend aktualisiert werden müssen. Nur auf die Behandlung dieser Objekte muss Rechenkapazität aufgewendet werden. Alle anderen Objekte müssen nicht berücksichtigt werden und können ohne zusätzliche Berechnungen ihre Zustände beibehalten, denn sie bleiben in den sortierten Koordinatenlisten an unveränderten Positionen und mit unveränderten Attributen versehen.

Das sind im Beispiel der Fig. 5 einerseits die zu beiden Zeitpunkten tₙ₋₁ und tₙ au-ßerhalb des Vorauswahlbereichs 230, 231 liegenden Objekte Nr. 6, 8 und 10 bis 15 und andererseits die zu beiden Zeitpunkten tₙ₋₁ und tₙ innerhalb des Vorauswahlbereichs 230, 231 liegenden Objekte Nr. 4 und 7. In realistischen Situationen kann zumindest die erstgenannte Menge der vor und nach der Aktualisierung außerhalb des Vorauswahlbereichs 230, 231 liegenden Objekte 201 so groß werden, dass die Echtzeitfähigkeit ohne die erfindungsgemäßen Konzepte gefährdet ist. Die Erfindung löst dieses Problem jedoch, denn auf alle mit diesen Objekten 201 im Zusammenhang stehenden Berechnungen kann nunmehr verzichtet werden. Rechenaufwand fällt nur für die wenigen Objekte an, die entlang zumindest einer Dimension innerhalb des erscheinenden Bereich 234 oder innerhalb des veschwindenden Bereich 235 lokalisiert sind. In der Fig. 5 sind das beispielhaft lediglich die vier Objekte 1, 2, 3 und 5. Die Grenzen der verschwindenden und erscheinenden Bereich 234, 235 in den Koordinatenlisten 210, 220, angedeutet durch die gestrichenen Pfeile, wird in jedem Zeitschritt der Simulation aktualisiert. Aufgrund der langsamen Bewegung des Referenzfahrzeugs 10 und anderer dynamischer Objekte im Vergleich zur Simulationsschrittweite ist dafür in Normalfall höchstens eine einzige inkrementelle Verschiebung einer Grenze in einer Koordinatenliste 210, 220 nötig.

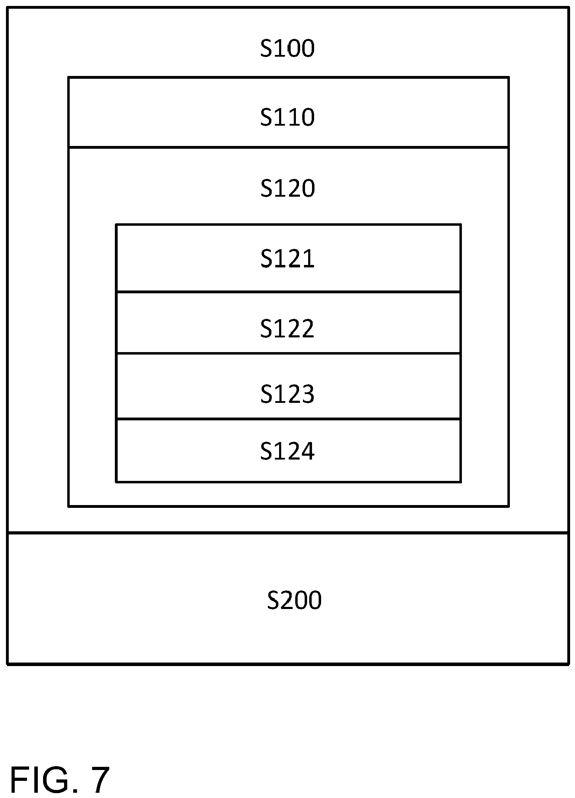

Erfindungsgemäß werden die Koordinatenlisten 210, 220, die Kennzeichnungen (in Fig. 5 die Kennzeichnungen "1" in den einzelnen Koordinatenlisten 210, 220) sowie die Objektidentifikationen (in Fig. 5 Kennzeichnungen "1" in allen Koordinatenlisten 210, 220) in zwei Schritten aktualisiert: Zunächst werden in einem Ermittlungsschritt, der dem Schritt S123 gemäß Fig. 7 entspricht, diejenigen relevanten Objekte 201 ermitteln, die potentiell überhaupt eine Veränderung der Menge O_{VAB} der Objekte im Vorauswahlbereich 230, 231 bewirken können. Anschließend erfolgt in einem Aktualisierungsschritt, der dem Schritt S124 gemäß Fig. 7 entspricht, auf Basis dieser Objekte die eigentliche Aktualisierung.

Ermittlung relevanter Objekte: Beim Übergang des früheren Vorauswahlbereichs 230 zum aktuellen Vorauswahlbereich 231 werden zunächst die Indizes in den Koordinatenlisten 210, 220 ermittelt, zwischen denen die maximalen und minimalen Koordinaten der erscheinenden und des verschwindenden Streifens 234, 235 liegen. Zum Beispiel
- liegt die maximale Koordinate des erscheinenden Streifens 234 in der y-Koordinatenliste 220 - in Fig. 5 mit "VAB y1" bezeichnet - zwischen der unteren y-Koordinate des Objekts Nr. 2 und der oberen y-Koordinate des Objekts Nr. 5. Die maximale Koordinate des erscheinenden Streifens 234 in der y-Koordinatenliste liegt demnach zwischen den Indizes 7 (betreffend Objekt Nr. 5) und 8 (betreffend Objekt Nr. 2); und es
- liegt die maximale Koordinate des erscheinenden Streifens 234 in der x-Koordinatenliste 210 - in Fig. 5 mit "VAB x2" bezeichnet - zwischen der unteren (linken) x-Koordinate des Objekts Nr. 7 und der oberen (rechten) x-Koordinaten des Objekts Nr. 9. Die maximale Koordinate des erscheinenden Streifens 234 in der x-Koordinatenliste liegt demnach unverändert zwischen den Indizes 16 (betreffend Objekt Nr. 7) und 17 (betreffend Objekt Nr. 9).

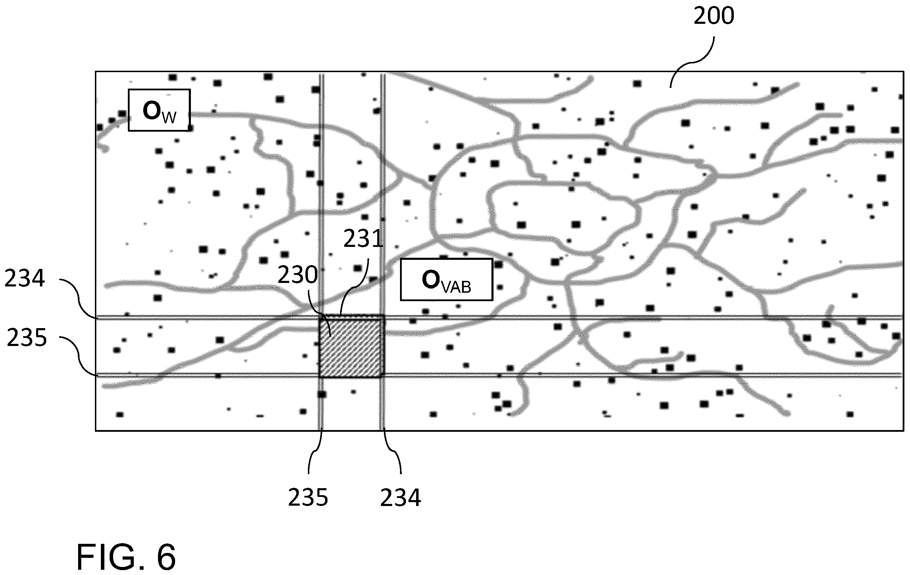

Fig. 6 zeigt, dass die Differenz zwischen den Positionen des Vorauswahlbereichs 230 zum Zeitpunkt tₙ₋₁ und des Vorauswahlbereichs 231 zum Zeitpunkt tₙ innerhalb der simulierten Umgebung 200 somit durch die in den Koordinatenlisten 210, 220 kodierten vier erscheinenden und verschwindenden Streifen 234, 235 festgelegt wird. Ausschließlich Objekte 110, von denen zumindest eine repräsentativen Koordinate in einem der vier erscheinenden oder verschwindenden Streifen 234, 235 liegt, werden als Kanditaten für eine Aktualisierung der durch den Vorauswahlberiehc 230 erfassten Objekte in Betracht gezogen und entsprechend untersucht. Für alle übrigen Objekte 110 in der simulierten Umgebung 200 fällt kein Rechenaufwand an.

Alle Objekte 201 in der simulierten Umgebung 200, von denen zumindest eine repräsentative Koordinate innerhalb der erscheinenden oder verschwindenden Streifen 234, 235 liegt, sind relevante Objekte im Sinne der vorliegenden Erfindung, die vorzugsweise mittels einer gesonderten Datenstruktur 236 ausgewertet werden. Die im genannten Sinne relevanten Objekte werden, vorzugsweise parallel zur oben beschriebenen Ermittlung der Koordinaten der Streifen 234, 235 (bzw. der Indizes, zwischen denen die Grenzen der Streifen verortet sind), zusammen mit ihren Attributen aus den Koordinatenlisten 210, 220 in die Datenstruktur 236 übernommen. Im Beispiel der Fig. 5 sind das im Einzelnen die folgenden fünf verschiedenen Objekte:
- Objekte Nr. 2, 1, 5 (Indizes 8 bis 9 in der y-Koordinatenliste) aus dem erscheinenden Streifen 234 der y-Koordinatenliste;
- Objekt Nr. 9 (Index 18 in der y-Koordinatenliste) aus dem verschwindenden Streifen 235 der y-Koordinatenliste;
- Objekte Nr. 3, 1 (Indizes 9 und 10 in der x-Koordinatenliste) aus dem verschwindenden Streifen 235 der y-Koordinatenliste.

Weiter werden in die Datenstruktur 236 die geänderten Kennzeichnungen 237, 238 aus den Koordinatenlisten 210, 220 übernommen, die in Fig. 5 als "x-Overlap" betreffend die x-Koordinatenliste (vgl. Zeile "x_In_VAB") und als "y-Overlap" betreffend die y-Koordinatenliste (vgl. Spalte "y_In_VAB") bezeichnet werden. Zum Beispiel
- verschiebt sich die maximale y-Koordinate "VAB y1" des Vorauswahlbereichs 230, 231 von einer Position zwischen den Indizes 10 und 11 (vgl. y-Koordinatenliste 220 in Fig. 4) zu einer Position zwischen den Indizes 7 und 8 (vgl. y-Koordinatenliste 220 in Fig. 5). Genau zwischen diesen y-Koordinaten liegt der erscheinende Streifen 234, welcher repräsentative Koordinaten der Objekte Nr. 1, 2, 5 umfasst. Diese Objekte waren in der der y-Koordinatenliste 220 gemäß Fig. 4 (Vorauswahlbereich 230 zu Zeitpunkt tₙ₋₁) noch nicht gekennzeichnet ("0"), sind aber in y-Koordinatenliste 220 gemäß Fig. 5 (Vorauswahlbereich 231 zum Zeitpunkt tₙ) entsprechend mit "1" gekennzeichnet;
- verschiebt sich die minimale x-Koordinate "VAB x1" des Vorauswahlbereichs 230, 231 von einer Position zwischen den Indizes 8 und 9 (vgl. x-Koordinatenliste 210 in Fig. 4) zu einer Position zwischen den Indizes 10 und 11 (vgl. x-Koordinatenliste 210 in Fig. 5). Genau zwischen diesen x-Koordinaten liegt der verschwindende Streifen 235, welcher repräsentative Koordinaten der Objekte 3, 1 umfasst. Diese Objekte waren in der y-Koordinatenliste 210 gemäß Fig. 4 (Vorauswahlbereich 230 zu Zeitpunkt tₙ₋₁) noch gekennzeichnet ("1"), sind aber in der x-Koordinatenliste 210 gemäß Fig. 5 (Vorauswahlbereich 231 zum Zeitpunkt tₙ) entsprechend nicht mehr gekennzeichnet ("0").

Aktualisierung der Objektidentifikationen: Insgesamt sind in der Datenstruktur 236 somit die Objekte Nr. 1, 2, 3, 5, 9 verzeichnet, denn diese besitzen Eckpunkte in den erscheinenden und verschwindenden Streifen 234, 235. In den Spalten "x-Overlap" und "y-Overlap" werden die entsprechenden Kennzeichnungen 237, 238 aus den aktualisierten Koordinatenlisten 210, 220 des Vorauswahlbereich zum Zeitpunkt tₙ eingetragen (vgl. Spalten "x-In-VAB" und "y-In_VAB"). Die Datenstruktur 236 lässt erkennen (vgl. Doppelpfeile), dass gegenüber der Situation in Fig. 4
- das Objekt Nr. 1 die x-Kennzeichnung verloren und eine y-Kennzeichnung erhalten hat;
- das Objekt Nr. 2 eine y-Kennzeichnung erhalten hat;
- das Objekt Nr. 3 die x-Kennzeichnung verloren hat;
- das Objekt Nr. 5 eine y-Kennzeichnung erhalten hat; und
- das Objekt Nr. 9 die y-Kennzeichnung verloren hat.

Basierend auf den Angaben in der Datenstruktur 236 werden dann zur Aktualisierung der Objektidentifikationen der Objekte 201 im Vorauswahlbereich 231 die im Zusammenhang mit der Fig. 4 erläuterten Overlap-Bedingungen geprüft. Danach sind Objekte 201 der Datenstruktur 236, die sowohl eine x-Kennzeichnung 237 als auch eine y-Kennzeichnung 238 besitzen, die also sowohl hinsichtlich einer repräsentativen x-Koordinate als auch hinsichtlich einer repräsentativen y-Koordinate in einem erscheinenden Streifen 234 (und insgesamt im erscheinenden Abschnitt 232) liegen, im verschobenen Vorauswahlbereich 231 zum Zeitpunkt tₙ neu enthalten. Objekte 201 der Datenstruktur 236, die die Overlap-Bedingung nicht erfüllen, sind demgegenüber nicht (mehr) in dem verschobenen Vorauswahlbereich 231 zum Zeitpunkt tₙ enthalten.

Im Ergebnis enthielt die Menge O_{VAB} der Objekte im Vorauswahlbereich 230 zum Zeitpunkt tₙ₋₁ die Objekte Nr. 3, 4, 7, 9. Beim Übergang zum Vorauswahlbereich 231 zum Zeitpunkt tₙ sind einerseits die Objekte Nr. 3 und 9 entfallen (denn sie liegen in dem verschwindenden Abschnitt 233) und das Objekt Nr. 2 ist hinzugekommen (denn es liegen im erscheinenden Abschnitt 232). Die Objekte Nr. 4 und 7 verbleiben, ohne dass Rechenkapazität auf diese aufgewendet würde, unverändert im Vorauswahlbereich 2301, 231 (vgl. die mit "Update" bezeichnete Tafel in Fig. 5).

Die identifizierten Objekte zum Zeitpunkt tₙ, also diejenigen im Vorauswahlbereich 231, sind diejenigen, die in jeder Koordinatenliste 210, 220 mindestens einmal gekennzeichnet sind, in Fig. 5 also die Objekte Nr. 2, 4, 7 (vgl. Doppelpfeile entlang der Koordinatenlisten 201, 220). Diese Objektidentifikationen können entweder, wie im Ausführungsbeispiel nach Fig. 5, allein in der doppelten (bzw. n-fachen) Kennzeichnung in den Koordinatenlisten 201, 220 bestehen, oder es kann eine separate Liste der identifizierten Objekte geführt werden, die auf die identifizierten Objekte in den Koordinatenlisten 210, 220 verweist.

Die Datenstruktur 236 wird nach der Aktualisierung der Objektidentifikationen initialisiert und dadurch vorbereitet für den nächsten Verschiebung des Vorauswahlbereichs betreffend den folgenden Zeitpunkt tₙ₊₁ .

Im Zusammenhang mit den anhand der Figuren 4 und 5 geschilderten bevorzugten Ausführungsformen sind weitere Ergänzungen, Ausführungsvarianten oder bevorzugte Alternativen möglich:
So ist regelmäßig eine Initialisierung der Menge O_{VAB} der Objekte im Vorauswahlbereich 230, 231 basierend auf der initialen Startposition des Vorauswahlbereichs 230 notwendig. Diese Initialisierung wird vorzugsweise mit der Initialisierung der diversen Datenstrukturen 220, 230, 236 im Rahmen der Initialisierung der gesamten Simulation zusammengefasst, etwa im Rahmen der bereits angesprochenen nicht Performance-sensitiven Vorschaltphase.

In simulierten Testumgebungen 200 sind ebenso wie unter realen Bedingungen die Objekte überwiegend statisch und nur wenige Objekte bewegen sich relativ zueinander und/oder relativ zum Referenzfahrzeug. Deshalb erzielt die Erfindung selbst bei der Annahme statischer Objekte auch bei der Simulation realistischer Verkehrssituationen große Vorteile hinsichtlich der Echtzeitfähigkeit entsprechender Algorithmen und Applikationen. Nichtstatische, dynamische Objekte können gemäß weiterer Ausführungsformen der Erfindung wie folgt berücksichtigt werden:
Solche Szenarien, in denen einige Objekte 201 ihre Position und damit ihre relative Positionierung im Verhältnis zu anderen Objekten 201 ändern, werden berücksichtigt, indem die Koordinatenlisten 210, 220 gemäß ihren Ausgangspositionen initial vorsortiert werden. Die Koordinatenlisten 210, 220 werden dann vor oder bei jedem Aktualisierungsschritt erneut sortiert, um die relativen Bewegungen der Objekte 201 abzubilden. Da sich zwischen zwei Zeitschritten tₙ₋₁ und tₙ in der Regel nur wenige Objekte 201 bewegen, sind solche Sortierverfahren vorteilhaft, die zur schnellen Behebung einzelner Sortierfehler in einer fast sortierten Liste ausgelegt sind, etwa Bubble-Sort, Insertion-Sort oder dergleichen.

Sofern die weiteren Objekte 201 allesamt statisch sind, müssen die erscheinenden Streifen und die verschwindenden Streifen 234, 235 hinsichtlich ihrer Breite ausschließlich die Eigenbewegung des Referenzfahrzeugs berücksichtigen, wie in der Figur 5 dargestellt. Bei Szenarien mit dynamischen Objekten 201 werden die erscheinenden und verschwindenden Streifen 234, 235 vorzugsweise breiter ausgelegt als bei statischen Objekten, damit sowohl die Eigenbewegung des Referenzfahrzeugs als auch die Bewegung der weiteren Objekte 201 berücksichtigt wird. Hierzu kann beispielsweise die Geschwindigkeit des schnellsten Objekts ermittelt und daraus die in einem Zeitschritt zurückgelegte Strecke ermittelt werden. Um dieses Maß werden die erscheinenden und verschwindenden Streifen 234, 235 beiderseits verbreitert. Mit der resultierenden Streifenbreite werden selbst im ungünstigsten Fall alle zu prüfenden Objekte 201 erfasst. Die genannte höchste Geschwindigkeit kann in jedem Zeitschritt aktuell ermittelt werden. Alternativ kann auch eine theoretische Höchstgeschwindigkeit angenommen werden, um Rechenkapazitäten einzusparen. In einer Verkehrssimulation kann es beispielsweise vorgesehen sein, dass sich kein Fahrzeug bzw. Objekt 201 schneller als 220 km/h oder 90 km/h (in einem urbanen Szenario) fortbewegt. In beiden Fällen vergrößert sich die Streifenbreite absolut gesehen nur geringfügig, sodass die vorstehend genannten erfindungsgemäßen Effekte und Vorteile auch im Falle von dynamischen Objekten Bestand haben.

Die Fig. 7 fasst einige wichtige Schritte des erfindungsgemäßen Verfahrens zusammen
- Gemäß einem Schritt S100 werden die Objekte 31, 32, 33, 110, 201 identifiziert, die innerhalb des Vorauswahlbereichs 30, 230, 231 in der simulierten Umgebung 100, 200 liegen, wobei der Vorauswahlbereich 30, 230, 231 einen Erfassungsbereich 20 des Sensors 11 umfasst.
- Gemäß einem Schritt S200 wird bestimmt, ob ein Objekt 31, 32, 33, 110, 201 in dem Vorauswahlbereich 30, 230, 231 von dem Sensorerfassungsbereich 11 erfasst wird.

Der Schritt S100 umfasst wiederum zumindest einige oder alle der folgenden Unterschritte:
- Gemäß einem Schritt S110 werden die Koordinatenlisten 210, 220 zu einem früheren Zeitpunkt tₙ₋₁ in der oben beschriebenen Weise geführt und dabei Objekte 31, 32, 33, 110, 201 identifiziert, die zu diesem Zeitpunkt im Vorauswahlbereich 30, 230 liegen.
- Gemäß einem Schritt S120 werden die Koordinatenlisten 210, 220 sortiert, damit sie entsprechend der Ordnung der Objekte 31, 32, 33, 110, 201 in der simulierten Umgebung 100, 200 komponentenweise sortiert vorliegen. Dieser Schritt wird vorzugsweise bei jeder Aktualisierung wiederholt, um sich bewegende Objekte 31, 32, 33, 110, 201 oder eine Bewegung des Referenzfahrzeugs 10 zu berücksichtigen.

Der Schritt S120 umfasst wiederum zumindest einige oder alle der folgenden Unterschritte:
- Gemäß einem Schritt S121 werden Koordinatenlisten geführt, die die repräsentativen Koordinaten von Objekten 31, 32, 33, 110, 201 sowie maximale und minimale Koordinaten des Vorauswahlbereichs 30, 230, 231 entlang den jeweiligen Dimensionen zu einem bestimmten Zeitpunkt auflisten. Dabei werden in den Koordinatenlisten 210, 220 insbesondere erscheinende Abschnitte 232 und/oder Streifen 234 bzw. verschwindende Abschnitte 233 und/oder Streifen 235 definiert, welche die neu in den Vorauswahlbereich 230, 231 eintretenden bzw. diesen verlassenden Objekte 31, 32, 33, 110, 201 kennzeichnen.
- Gemäß einem Schritt S122 werden die Koordinatenlisten 210, 220 derart sortieren, dass sie solche repräsentativen Koordinaten kennzeichnen 237, 238, die zu dem bestimmten Zeitpunkt zwischen den minimalen und maximalen Koordinaten des Vorauswahlbereichs 30, 230, 231 entlang der betreffenden Dimension, das heißt in dem erscheinenden Abschnitt 232 und/oder Streifen 234 bzw. in dem verschwindenden Abschnitt 233 und/oder Streifen 235 liegen.
- Gemäß einem Schritt S123 (Ermittlungsschritt) werden die relevanten Objekte 31, 32, 33, 110, 201 wie im Zusammenhang mit Fig. 5 beschrieben ermittelt und in entsprechenden Datenstrukturen niedergelegt 210, 220, 236.
- Gemäß einem Schritt S124 (Aktualisierungsschritt) werden die Objektidentifikationen wie im Zusammenhang mit Fig. 5 beschrieben anhand der Datenstrukturen 210, 220, 236 ermittelt und/oder in diesen festgelegt.

Zusammenfassend resultiert der erfindungsgemäße Effekt, nämlich die Echtzeitfähigkeit der Simulation, daraus, dass Rechenkapazitäten nur auf Objekte aufgewendet werden müssen, die - bzw. deren repräsentative Koordinaten - nach der Aktualisierung des Vorauswahlbereichs in einem erscheinenden oder einem verschwindenden Streifen liegen, den Vorauswahlbereich im betreffenden Zeitschritt also neu betreten oder verlassen. Der Vorauswahlbereich ändert sich in realistischen Szenarien in der Regel zwischen einem früheren Zeitpunkt tₙ₋₁ und einem aktuellen Zeitpunkt tₙ nur um wenige Zentimeter, so dass gemäß dem erfindungsgemäßen Verfahren in einem Zeitschritt nur sehr wenige, oft gar keine Objekte betrachten werden müssen. Nahezu unabhängig von der Anzahl der Objekte in der simulierten Umgebung (der Menge Ow) und der Anzahl der Objekte im Vorauswahlbereich (der Menge O_{VAB}) wird erfindungsgemäß nur nahezu konstant wenig Rechenkapazität für die Aktualisierung des Vorauswahlbereichs im Rahmen der angesprochenen "Broad Phase" und der nachgeordneten Bestimmung der Objekte im Sensorerfassungsbereich benötigt.

Die benötigte Rechenkapazität ist erfindungsgemäß nicht proportional zur Größe der Mengen Ow oder O_{VAB}, sondern allein zur Anzahl der den Vorauswahlbereich betretenden oder verlassenden Objekte. Dadurch gefährden selbst beliebig großen Objektmengen im der "Broad Phase" nicht mehr die Echtzeitfähigkeit der Simulation.

Die vorstehende Beschreibung offenbart die Erfindung unter Bezugnahme auf bestimmte Ausführungsformen. Von den dabei beschriebenen Komponenten, Elementen und Prozessabläufen kann jedoch im Umfang der anliegenden Ansprüche abgewichen werden, ohne den Gegenstand der vorliegenden Erfindung zu verlassen. Die Beschreibung und die Zeichnungen sind dementsprechend zwar illustrativ jedoch nicht einschränkend zu verstehen.

## Patentansprüche

1. Computer-implementiertes Verfahren zum Erkennen von Objekten (110, 201), die von einem Sensor (11) erfasst werden, wobei sich die Objekte (31, 32, 33, 110, 201) und der Sensor (11) in einer simulierten Umgebung (100, 200) relativ zueinander bewegen, umfassend die folgenden Schritte:
- Identifizieren (S100) von Objekten (31, 32, 33, 110, 201), die innerhalb eines Vorauswahlbereichs (30, 230, 231) in der simulierten Umgebung (100, 200) liegen, wobei der Vorauswahlbereich (30, 230, 231) einen Erfassungsbereich (20) des Sensors (11) umfasst; und
- Bestimmen (S200), ob ein Objekt (31, 32, 33, 110, 201) in dem Vorauswahlbereich (30, 230, 231) von dem Sensorerfassungsbereich (11) erfasst wird;
**dadurch gekennzeichnet, dass**
Objekte (31, 32, 33, 110, 201) identifiziert werden (S100), die zu einem aktuellen Zeitpunkt (tn) in dem Vorauswahlbereich (30, 230, 231) liegen, indem Listen (220, 230) mit sortierten Koordinaten entlang von Dimensionen der simulierten Umgebung (100, 200) geführt werden, welche solche Objekte (31, 32, 33, 110, 201) identifizieren, die zu einem früheren Zeitpunkt in dem Vorauswahlbereich (30, 230, 231) lagen (S110), und
die Koordinatenlisten (210, 220) aktualisiert werden (S120), indem
Objektidentifizierungen von Objekten (31, 32, 33, 110, 201) hinzugefügt werden (S124), welche zum aktuellen Zeitpunkt in einem erscheinenden Abschnitt (232) des Vorauswahlbereichs (30, 230, 231) liegen, der zum früheren Zeitpunkt noch nicht von dem Vorauswahlbereich (30, 230, 231) erfasst wurde und /oder
Objektidentifizierungen von Objekten (31, 32, 33, 110, 201) entfernt werden (S124), welche zum früheren Zeitpunkt in einem verschwindenden Abschnitt (233) des Vorauswahlbereichs (30, 230, 231) liegen, der zum aktuellen Zeitpunkt nicht mehr von dem Vorauswahlbereich (30, 230, 231) erfasst wird.

2. Verfahren nach Anspruch 1, wobei für jede Dimension der simulierten Umgebung (100, 200) die jeweilige Koordinatenliste (210, 220)
derart geführt wird (S121), dass sie repräsentative Koordinaten von Objekten (31, 32, 33, 110, 201) sowie maximale und minimale Koordinaten des Vorauswahlbereichs (30, 230, 231) entlang der betreffenden Dimension zu einem bestimmten Zeitpunkt auflistet; und
derart sortiert wird (S122), dass sie solche repräsentativen Koordinaten kennzeichnet 237, 238), die zu dem bestimmten Zeitpunkt zwischen den minimalen und maximalen Koordinaten des Vorauswahlbereichs (30, 230, 231) entlang der betreffenden Dimension liegen.

3. Verfahren nach Anspruch 2, wobei für jede Dimension der simulierten Umgebung (100, 200) die jeweilige Koordinatenliste (210, 220)
derart geführt wird (S121), dass sie als repräsentative Koordinaten minimale und maximale Koordinaten von Objekten (31, 32, 33, 110, 201) auflistet; und
derart sortiert wird (S122), dass sie maximale und/oder minimale Koordinaten von Objekten (31, 32, 33, 110, 201) kennzeichnet (237, 238), die zwischen den minimalen und maximalen Koordinaten des Vorauswahlbereichs (30, 230, 231) entlang der betreffenden Dimension liegen.

4. Verfahren nach Anspruch 2 oder 3, wobei die Koordinatenlisten (210, 220) derart geführt werden (S121), dass sie repräsentative Koordinaten aller Objekte (31, 32, 33, 110, 201) innerhalb der simulierten Umgebung (100, 200) oder von Objekten (31, 32, 33, 110, 201) innerhalb eines den Vorauswahlbereich (30, 230, 231) umschließenden Bereichs auflisten.

5. Verfahren nach einem der Ansprüche 2 bis 4, wobei solche Objekte (110, 201) als zu dem bestimmten Zeitpunkt innerhalb des Vorauswahlbereichs (30, 230, 231) liegend identifiziert werden (S120), von denen wenigstens eine repräsentative Koordinate entlang aller Dimensionen zwischen den maximalen und minimalen Koordinaten des Vorauswahlbereichs (30, 230, 231) liegt.

6. Verfahren nach einem der Ansprüche 2 bis 5, wobei die Koordinatenlisten (210, 220) und Objektidentifikationen zum aktuellen Zeitpunkt ausgehend von den Koordinatenlisten (210, 220) und Objektidentifikationen zum früheren Zeitpunkt aktualisiert werden (S120), indem
maximale und minimale Koordinaten des Vorauswahlbereichs (30, 230, 231) entlang der Dimension der jeweiligen Koordinatenliste (210, 220) derart aktualisiert werden (S120), dass die aktualisierten Koordinatenlisten (210, 220) den erscheinenden Abschnitt (232) und den verschwindenden Abschnitt (233) des Vorauswahlbereichs (30, 230, 231) definieren und/oder
Objektidentifizierungen hinzugefügt werden (S124), wenn wenigstens eine repräsentative Koordinate eines zum früheren Zeitpunkt nicht identifizierten Objekts (31, 32, 33, 110, 201) entlang aller Dimensionen in dem erscheinenden Abschnitt (232) liegt und/oder
Objektidentifizierungen entfernt werden (S124), wenn wenigstens eine repräsentative Koordinate, bevorzugte eine Mehrzahl von oder alle repräsentativen Koordinaten eines zum früheren Zeitpunkt identifizierten Objekts (31, 32, 33, 110, 201) entlang aller Dimensionen im verschwindenden Abschnitt (233) liegen.

7. Verfahren nach einem der Ansprüche 2 bis 6, wobei das Aktualisieren (S120) der Koordinatenlisten (210, 220) und Objektidentifikationen umfasst:
Einfügen von maximalen und minimalen Koordinaten eines erscheinenden Streifens (234) in die Koordinatenlisten (210), wobei der erscheinende Streifen (234) den erscheinenden Abschnitt (232) entlang der Dimension der jeweiligen Koordinatenliste (210) einschließt und/oder
Einfügen von maximalen und minimalen Koordinaten eines verschwindenden Streifens (235) in die Koordinatenlisten (220), wobei der verschwindende Streifen (235) den verschwindenden Abschnitt (233) entlang der Dimension der jeweiligen Koordinatenliste (220) einschließt, und/oder
Hinzufügen einer Kennzeichnung (237, 238) eines Objekts (31, 32, 33, 110, 201) in einer Koordinatenliste (210, 220), wenn eine repräsentative Koordinate des Objekts (110, 201) innerhalb des erscheinenden Streifens (234) entlang der Dimension der jeweiligen Koordinatenliste (210) liegt, und/oder
Entfernen einer Kennzeichnung (237, 238) eines Objekts (31, 32, 33, 110, 201) in einer Koordinatenliste (220), wenn eine repräsentative Koordinate des Objekts (110, 201) innerhalb des verschwindenden Streifens (235) entlang der Dimension der jeweiligen Koordinatenliste (220) liegt.

8. Verfahren nach Anspruch 7, wobei
eine Datenstruktur (236) der zum aktuellen Zeitpunkt relevanten Objekte angelegt wird (S123), deren Kennzeichnung (237, 238) im Vergleich zum früheren Zeitpunkt hinzugefügt oder entfernt wurde, wobei die Datenstruktur (236) für jedes relevante Objekt (31, 32, 33, 110, 201) diejenigen Dimensionen angibt, entlang derer das Objekt (31, 32, 33, 110, 201) in den jeweiligen Koordinatenlisten (210, 220) gekennzeichnet ist und/oder
Objektidentifikationen von relevanten Objekten (31, 32, 33, 110, 201) hinzugefügt werden (S124), die entlang aller Dimensionen in den jeweiligen Koordinatenlisten (210, 220) gekennzeichnet sind und/oder
Objektidentifikationen von relevanten Objekten (31, 32, 33, 110, 201) entfernt werden (S124), die entlang zumindest einer Dimension in den jeweiligen Koordinatenlisten (210, 220) nicht gekennzeichnet sind.

9. Verfahren nach Anspruch 7 oder 8, wobei
die Breite der erscheinenden und/oder verschwindenden Streifen (234, 235) abhängig von der Bewegung der Objekte (31, 32, 33, 110, 201) und des Sensors (11) relativ zueinander zwischen zwei Zeitpunkten bestimmt wird und vorzugsweise derart bestimmt wird, dass
alle Objekte (31, 32, 33, 110, 201), die zwischen dem früheren und dem aktuellen Zeitpunkt aus dem Vorauswahlbereich (30m 230, 231) verschwinden, von dem verschwindenden Abschnitt (233) erfasst werden und/oder alle Objekte (31, 32, 33, 110, 201), die zwischen dem früheren und dem aktuellen Zeitpunkt in dem Vorauswahlbereich (30, 230, 231) erscheinen, von dem erscheinenden Abschnitt (234) erfasst werden.

10. Verfahren nach einem der vorhergehenden Ansprüche, wobei
innerhalb der simulierten Umgebung (100, 200) eine Verkehrsszene mit Fahrzeugen und/ oder Fußgängern als Objekte (31, 32, 33, 110, 201) aus der Sicht eines Referenzfahrzeugs (10), an dem der (11) Sensor angebracht ist, simuliert wird, wobei
der Vorauswahlbereich (30, 230, 231) derart bestimmt wird, dass er Fahrzeuge und/oder Fußgänger erfasst, die innerhalb des Sensorerfassungsbereichs (20) liegen und/oder
das Referenzfahrzeug (10) und/oder mindestens ein Objekt (31, 32, 33, 110, 201) sich in der simulierten Umgebung (100, 200) bewegt, so dass zum aktuellen Zeitpunkt Objekte (31, 32, 33, 110, 201) im erscheinenden Abschnitt (232) und/oder im verschwindenden Abschnitt (233) liegen.

11. Verfahren nach einem der vorhergehenden Ansprüche, wobei
die Breite des erscheinenden Abschnitts (232) und/oder des verschwindenden Abschnitts (233) und/oder die Zeitverzögerung zwischen dem früheren und dem aktuellen Zeitpunkt derart gewählt wird, dass
Objekte (31, 32, 33, 110, 201), die sich zum aktuellen Zeitpunkt im Vorauswahlbereich (30, 230, 231) befinden, in Echtzeit identifiziert werden und/oder Objekte (31, 32, 33, 110, 201), die sich zum aktuellen Zeitpunkt im Erfassungsbereich (20) des Sensors (11) befinden, in Echtzeit bestimmt werden und/oder
die Zeitverzögerung zwischen 0,5 ms und 5 ms, vorzugsweise zwischen 0,5 ms und 2 ms, besonders bevorzugt zwischen 0,5 ms und 1,5 ms und am meisten bevorzugt bei etwa 1 ms liegt.

12. Verfahren nach einem der vorhergehenden Ansprüche, wobei Bewegungen von Objekten (31, 32, 33, 110, 201) und/oder des Sensors (11) relativ zueinander derart berücksichtigt werden, dass die Koordinatenlisten (210, 220) sortiert werden, sobald sie aktualisiert werden.

13. Simulationssystem (50), welches derart konfiguriert ist, dass es Objekte (110, 201) erkennt, die von einem Sensor (11) erfasst werden, wobei sich die Objekte (110, 201) und der Sensor (11) innerhalb einer simulierten Umgebung (100, 200) relativ zueinander bewegen, wobei das System (50) eine Verarbeitungseinrichtung (51, 60) umfasst, die derart konfiguriert ist, dass
- Objekte (31, 32, 33, 110, 201) identifiziert werden, die innerhalb eines Vorauswahlbereichs (30, 230, 231) in der simulierten Umgebung (100, 200) liegen, wobei der Vorauswahlbereich (30, 230, 231) einen Erfassungsbereich (20) des Sensors umfasst; und
- bestimmt wird, ob ein Objekt (31, 32, 33, 110, 201) in dem Vorauswahlbereich (30, 230, 231) von dem Sensorerfassungsbereich (20) erfasst wird;
**dadurch gekennzeichnet, dass** die Verarbeitungseinrichtung (51, 60) ferner derart konfiguriert ist, dass
Objekte (31, 32, 33, 110, 201) identifiziert werden, die zu einem aktuellen Zeitpunkt in dem Vorauswahlbereich (30, 230, 231) liegen, indem Listen (210, 220) mit sortierten Koordinaten entlang von Dimensionen der simulierten Umgebung (100, 200) geführt werden, welche solche Objekte (110, 201) identifizieren, die zu einem früheren Zeitpunkt in dem Vorauswahlbereich (30, 230, 231) lagen, und
die Koordinatenlisten (210, 220) aktualisiert werden, indem
Objektidentifizierungen von Objekten (31, 32, 33, 110, 201) hinzugefügt werden, welche zum aktuellen Zeitpunkt in einem erscheinenden Abschnitt (232) des Vorauswahlbereichs (30, 230, 231) liegen, der zum früheren Zeitpunkt noch nicht von dem Vorauswahlbereich (30, 230, 231) erfasst wurde und /oder
Objektidentifizierungen von Objekten (31, 32, 33, 110, 201) entfernt werden, welche zum früheren Zeitpunkt in einem verschwindenden Abschnitt (233) des Vorauswahlbereichs (30, 230, 231) liegen, der zum aktuellen Zeitpunkt nicht mehr von dem Vorauswahlbereich (30, 230, 231) erfasst wird.

14. Simulationssystem (50) nach Anspruch 13, wobei die Verarbeitungseinrichtung (51, 60) ferner derart konfiguriert ist, ein Verfahren nach einem der Ansprüche 2 bis 12 auszuführen.

15. Computerprogrammprodukt (60) mit Befehlen, die bei Ausführung des Programms durch einen Computer (50, 51) den Computer (50, 51) veranlassen, ein Verfahren nach einem der Ansprüche 1 bis 12 auszuführen, wobei das Computerprogrammprodukt (60) vorzugsweise einer Verarbeitungseinrichtung (51, 60) gemäß Anspruch 13 oder 14 realisiert.
